# EUROPEAN PATENT APPLICATION

(11) **EP 2 375 360 A1**
(43) Date of publication of application: **12.10.2011**
(21) Application number: 09831643.3
(22) Date of filing: 01.12.2009
(51) Int. Cl.: G06F 21/24, G06Q 30/00

(54) **PERSONAL INFORMATION EXCHANGING SYSTEM, PERSONAL INFORMATION PROVIDING APPARATUS, DATA PROCESSING METHOD THEREFOR, AND COMPUTER PROGRAM THEREFOR**

(30) Priority: 08.12.2008 JP 2008311966
(71) Applicant: NEC Corporation, Minato-ku Tokyo 108-8001 (JP)
(72) Inventor: HATAKEYAMA, Makoto, Tokyo 108-8001 (JP)
(74) Representative: Betten & Resch
(86) International application number: PCT/JP2009/006518
(87) International publication number: WO 2010/067535

(57) **Abstract**

A personal information providing apparatus 100 includes: a policy storage unit 102 that stores an approved privacy policy; a policy temporary storage unit 104 that temporarily stores an unapproved policy; a policy management unit 108 that records and manages policy storage locations into a policy management table storage unit 106; a search unit 110 that searches for the corresponding policy by reference to the policy management table storage unit 106; a policy creation unit 112 that automatically creates a new policy when the corresponding policy is not found; a policy temporary registration unit 114 that temporarily registers the created policy in the policy temporary storage unit 104; an instruction acceptance unit 116 that presents the temporarily-registered policy to the user to confirm with the user whether to approve the temporarily-registered policy; and a policy registration unit 118 that registers a user approved policy in the policy storage unit 102.

## Description

### Technical Field

The present invention relates to a personal information exchanging system, a personal information providing apparatus, a data processing method therefore and a computer program therefor, and particularly to a personal information exchanging system and a personal information providing apparatus for exchanging or providing personal information according to a privacy policy, a data processing method therefor, and a computer program therefor.

### Background Art

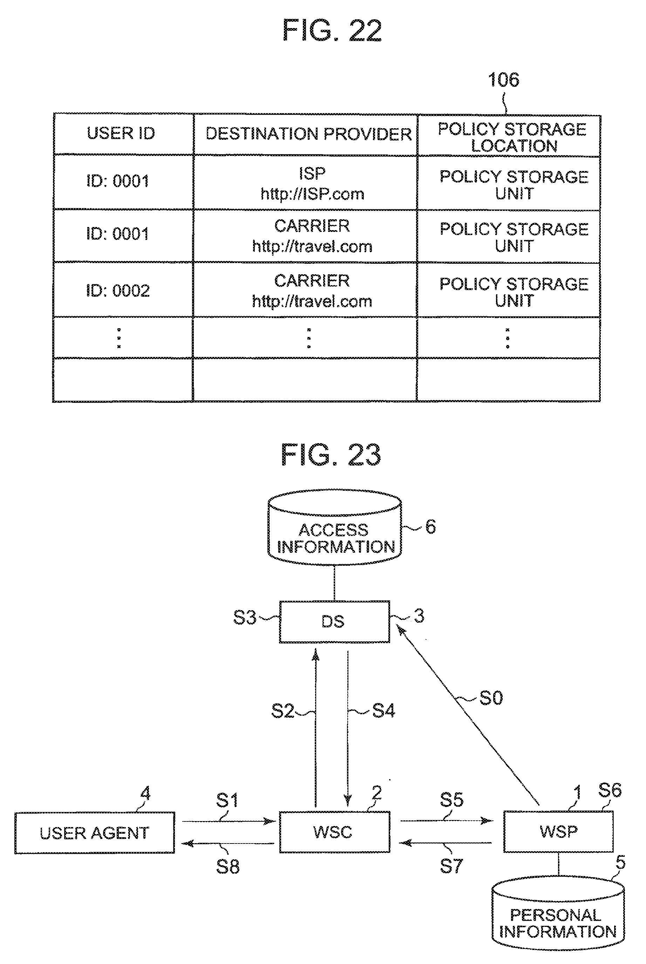

As this type of technique, there is a standard technical specification ID-WSF (Identity Web Services Framework) for use in linking information on users among businesses on a network, which has been developed by Liberty Alliance Project (See Fig. 23). An example of a personal information exchanging system with ID-WSF is disclosed in Non-patent Document 1.

The personal information exchanging system described in Non-patent Document 1 is composed of a web service provider (hereinafter, referred to as "WSP") 1, a web service consumer (hereinafter, referred to as "WSC") 2, a discovery service (hereinafter, abbreviated as "DS") 3, and a user agent (user terminal software) 4 connected via a network. The following describes a procedure for searching for, requesting, and responding to personal information by using the DS 3 as typical operations of the personal information exchanging system described in Non-patient Document 1 having the above configuration. In Fig. 23, it is assumed that the WSP 1. has information on a user who operates the user agent 4 as personal information 5 and sets access information 6 to the DS 3 as preprocessing (step S0). This enables the DS 3 to access the WSP 1 that has the user's personal information.

In Fig. 23, the user accesses the WSC 2 to use a service restricted in the use of the WSC 2 via the user agent 4 (step S1). The WSC 2 sends an access information request certificate request message to the DS 3 (step S2). In response to the request, the DS 3 issues an access token (step S3), and the WSC 2 acquires access information 6 and an access token (step S4). The WSC 2 sends a request message for the personal information 5 to the WSP 1 on the basis of the acquired access information (step S5). Upon accepting the request, the WSP 1 performs approval determination (step S6) and sends the personal information 5 to the WSC 2 on the basis of a result of the determination (step S7). In the approval determination, whether access is enabled is determined by using an access rule or other information. Then, the service is transcribed from the WSC 2 to the user agent 4 (step S8).

As described hereinabove, the personal information exchanging system described in Non-patent Document 1 enables personal information to be exchanged by performing an approval determination on a policy or the like by the WSP 1 in response to a request for user's personal information.

Moreover, an example of an information processor based on a rule is described in Patent Document 1. As illustrated in Fig. 24, an information processor 10 is composed of an action operating unit 12, an error operation determination unit 13, a feedback learning unit 14, a rule modification unit 15, and a rule storage unit 16.

The information processor 10, based on the rule, having the above configuration operates as described below. Specifically, an action operating unit 12 performs information processing corresponding to a rule held in the rule storage unit 16 on the basis of the rule. An error operation determination unit 13 determines whether a response to information processing is affirmative or negative on the basis of a result of the processing performed by the action operating unit 12. A feedback learning unit 14 evaluates the rule corresponding to the information processing by using a result of the determination. Thereafter, the rule modification unit 15 modifies the rule held in the rule storage unit 16 on the basis of the evaluation.

As illustrated in the case of the above document, before exchanging user's personal information among entities, a user's consent is confirmed and a result thereof is stored as a policy. In the case of the alteration of the policy, a result of the alteration is made reflected on existing policies. When another entity accesses an entity that manages personal information, whether access is enabled is determined by using the policy reflecting the result of the alteration.

Further, an access right managing method described in Patent Document 2 includes collectively storing and managing personal private information and a policy for use in disclosing the private information in a server and determining whether the disclosure is enabled according to the policy in response to a request for the disclosure of the private information.

### Citation List

### Patent Literature

PTL 1: Japanese Patent Application Laid-Open No. 2008-123332
PTL 2: Japanese Patent Application Laid-Open No. 2002-324194

### Non Patent Literature

NPL 1: Liberty Alliance Project, "Liberty Identity Web Services Framework (ID-WSF) V2.0," [online], July 9, 2007, [searched for on July 1, 2008], Internet, <URL http://www.projectliberty.org/liberty/resource__center/speci fications/liberty_alliance_id_wsf_2_0_specifications_includ ing_errata_v1_0_updates >

### Summary of Invention

### Technical Problem

In the above methods, when the user sets a policy (privacy policy) on whether access to personal information is enabled, there is a need to set the policy for each device to which the personal information is sent. Therefore, the more the number of WSCs, the more the number of settings of the policy increases, which leads to a problem that it is inefficient to set a policy based on a user's consent according to a device to which the personal information is sent.

The reason why the policy is set for each device is because the user needs to confirm the purpose of use, the use range, and the like in the light of privacy protection or compliance. As described above, however, it forces the user to bear the burden that the user sets all policies for the respective devices to which the personal information is sent.

It is an object of the present invention to provide a personal information exchanging system, a personal information providing apparatus, a data processing method therefor, and a computer program therefor that solve the above problem.

### Solution to Problem

A personal information providing apparatus according to the present invention includes: a policy storage device that stores a privacy policy set for each personal information acquisition device, which acquires user's personal information, and for each user; a policy management element for recording and managing identification information, which identifies whether the privacy policy is stored in the policy storage device, in the policy management table for each personal information acquisition device and for each user; a search element for searching for the identification information on the privacy policy corresponding to the personal information acquisition device and the user by reference to the policy management table; a policy creation element for automatically creating a new privacy policy on the basis of a default privacy policy when the identification information on the corresponding privacy policy is not found; and a policy registration element for storing the created privacy policy in the policy storage device and notifying the policy management element of the identification information to record the identification information on the privacy policy in the policy management table.

A personal information exchanging system according to the present invention includes: a personal information storage device that stores personal information; the above-described personal information providing apparatus; a personal information acquisition device that requests and acquires user's personal information from the personal information providing apparatus; and a user terminal device of the user, wherein the personal information providing apparatus confirms with the user of the user terminal device whether to approve the use of the privacy policy of the personal information in response to the request for the personal information from the personal information acquisition device, accepts an instruction from the user via the user terminal device, and provides the personal information acquisition device with the user's personal information acquired from the personal information storage device according to the approved privacy policy.

A data processing method according to the present invention is a data processing method for a personal information providing apparatus that includes a policy storage device for storing a privacy policy set for each personal information acquisition device, which acquires the user's personal information, and for each user, the method comprising: recording and managing identification information, which identifies whether the privacy policy is stored in the policy storage device, in the policy management table for each personal information acquisition device and for each user; searching for the identification information on the privacy policy corresponding to the personal information acquisition device and the user by reference to the policy management table; automatically creating a new privacy policy on the basis of a default privacy policy when the identification information on the corresponding privacy policy is not found; and storing the created privacy policy in the policy storage device and recording identification information on the privacy policy in the policy management table.

A computer program according to the present invention is a computer program for causing a computer to implement a personal information providing apparatus, the computer program causing the computer that includes a policy storage device for storing a privacy policy set for each personal information acquisition device, which acquires user's personal information, and for each user to perform; a policy management procedure for recording and managing identification information, which identifies whether the privacy policy is stored in the policy storage device, in the policy management table for each personal information acquisition device and for each user; a search procedure for searching for the identification information on the privacy policy corresponding to the personal information acquisition device and the user by reference to the policy management table; a policy creation procedure for automatically creating a new privacy policy on the basis of a default privacy policy when the identification information on the corresponding privacy policy is not found; and a policy registration procedure for storing the created privacy policy in the policy storage device and recording the identification information on the privacy policy in the policy management table.

It is to be understood that any arbitrary combinations of the above-described constituents, and any exchanges of expression of the present invention among method, apparatus, system, recording medium, computer program and so forth may be effective as exemplary embodiments of the present invention.

Various constituents of the present invention do not always need to be independent of each other. It is also possible that a plurality of constituents are formed as one member, one constituent is formed of a plurality of members, a constituent is a portion of another constituent, a portion of a constituent overlaps with a portion of another constituent, and the like.

Although the data processing method and the computer program of the present invention recite a plurality of procedures in order, the order of description does not limit the order of execution of the plurality of procedures. For this reason, in executing the data processing method and the computer program of the present invention, the order of the plurality of procedures can be changed within a range that does not deteriorate the scope of the present invention.

Also, the plurality of procedures of the data processing method and the computer program of the present invention are not limited to being executed at timings that are individually different from each other. For this reason, there may be a case in which a certain procedure is performed while another procedure is being performed, a case in which an execution timing of a certain procedure and an execution timing of another procedure are partly or wholly overlapped with each other, and the like cases.

### Advantageous Effects of Invention

According to the present invention, there are provided a personal information exchanging system, a personal information providing apparatus, a data processing method therefor, and a computer program therefor that save the effort of the user operation of registering privacy policies.

### Brief Description of Drawings

[Fig. 1] It depicts a block diagram illustrating the configuration of a personal information exchanging system according to an exemplary embodiment of the present invention.
[Fig. 2] It depicts a functional block diagram illustrating the configuration of a personal information providing apparatus of the personal information exchanging system illustrated in Fig. 1.
[Fig. 3] It depicts a flowchart illustrating an example of the operation of a personal information providing apparatus of the personal information exchanging system illustrated in Fig. 1.
[Fig. 4] It depicts a functional block diagram illustrating the configuration of a personal information providing apparatus of a personal information exchanging system according to an exemplary embodiment of the present invention.
[Fig. 5] It depicts a flowchart illustrating an example of the operation of the personal information providing apparatus illustrated in Fig. 4.
[Fig. 6] It depicts a functional block diagram illustrating the configuration of a personal information providing apparatus of a personal information exchanging system according to an exemplary embodiment of the present invention.
[Fig. 7] It depicts a flowchart illustrating an example of the flow of policy modification processing of the personal information providing apparatus illustrated in Fig. 6.
[Fig. 8] It depicts a functional block diagram illustrating the configuration of a personal information providing apparatus of a personal information exchanging system according to an exemplary embodiment of the present invention.
[Fig. 9] It depicts a functional block diagram illustrating the configuration of a personal information providing apparatus of a personal information exchanging system according to an exemplary embodiment of the present invention.
[Fig. 10] It depicts a flowchart illustrating an example of the operation of a personal information acquisition device and the personal information providing apparatus of the personal information exchanging system illustrated in Fig. 9.
[Fig. 11] It depicts a flowchart illustrating an example of the flow of privacy policy search processing illustrated in Fig. 10.
[Fig. 12] It depicts a block diagram illustrating the configuration of a personal information exchanging system according to an exemplary embodiment of the present invention.
[Fig. 13] It depicts a functional block diagram illustrating the configuration of a personal information acquiring and providing apparatus of the personal information exchanging system illustrated in Fig. 12.
[Fig. 14] It depicts a flowchart illustrating an example of the operation of the personal information exchanging system illustrated in Fig. 12.
[Fig. 15] It depicts a diagram illustrating the configuration and message flow for describing a working example of the present invention.
[Fig. 16] It depicts an example of information stored in a policy management table storage unit of a personal information providing apparatus in a working example of the present invention.
[Fig. 17] It depicts an example of information stored in a policy management table storage unit of a personal information providing apparatus in a working example of the present invention.
[Fig. 18] It depicts an example of information stored in a policy management table storage unit of a personal information providing apparatus in a working example of the present invention.
[Fig. 19] It depicts a diagram illustrating the configuration and message flow for describing a working example of the present invention.
[Fig. 20] It depicts an example of information stored in a policy management table storage unit of a personal information providing apparatus in a working example of the present invention.
[Fig. 21] It depicts an example of information held in a policy management table storage unit of a personal information acquiring and providing apparatus in a working example of the present invention.
[Fig. 22] It depicts an example of information held in a policy management table storage unit of a personal information acquiring and providing apparatus in a working example of the present invention.
[Fig. 23] It depicts a flowchart of a message for performing an exchange of personal information in the technique described in Non-patent Document 1.

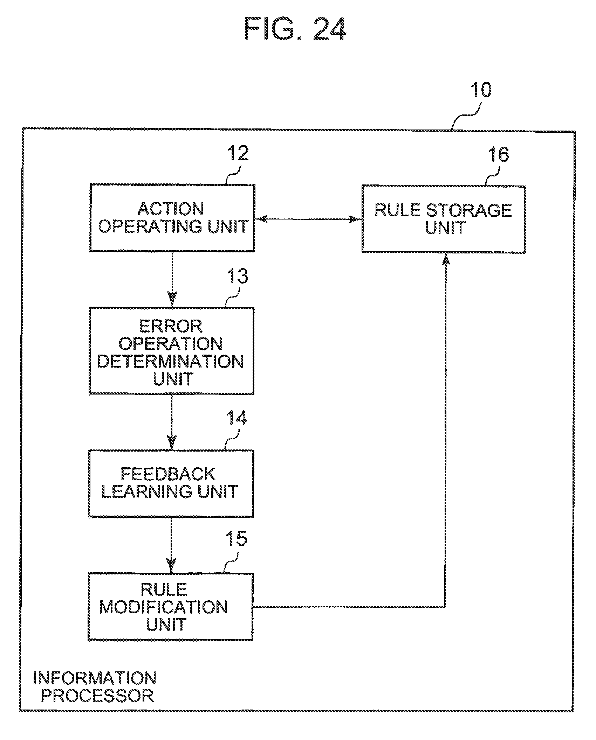

[Fig. 24] It depicts a block diagram illustrating the configuration of an information processor in the technique described in Patent Document 1.

### Description of Embodiment

Hereinafter, preferred exemplary embodiments of the present invention will be described in detail with reference to the accompanying drawings. Note that the same reference numerals are used for the same elements throughout the drawings and the description thereof will be appropriately omitted.

### (First exemplary embodiment)

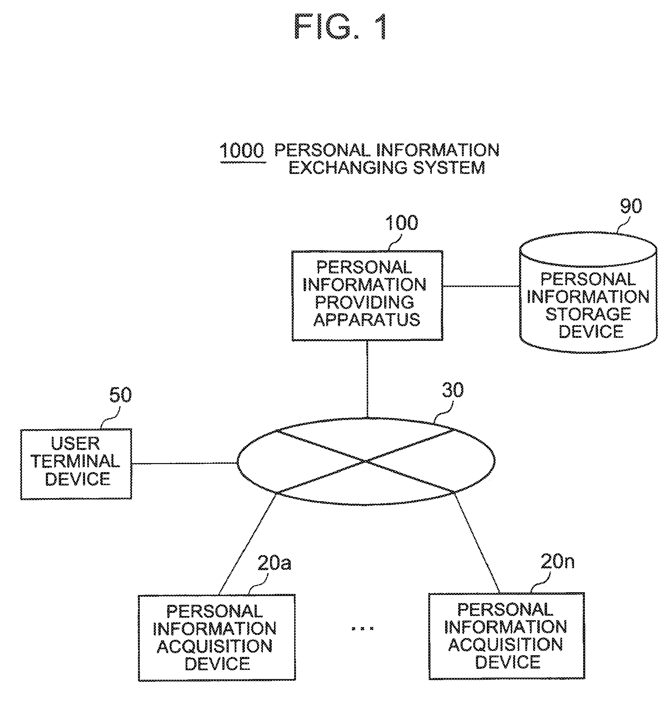

Fig. 1 is a block diagram illustrating the configuration of a personal information exchanging system 1000 according to an exemplary embodiment of the present invention.
The personal information exchanging system 1000 includes a personal information storage device 90, which stores personal information, a personal information providing apparatus 100, a personal information acquisition device (in Fig. 1, a plurality of personal information acquisition devices 20a, ..., 20n: unless particularly distinguished, hereinafter referred to as "personal information acquisition device 20"), which acquires user's personal information by requesting the user's personal information from the personal information providing apparatus 100, and a user terminal device 50 of a user.
The personal information providing apparatus 100 provides user's personal information in response to a request for personal information from the personal information acquisition device 20. The personal information providing apparatus 100 confirms with the user of the user terminal device 50 whether to approve the use of the privacy policy of the personal information and accepts an instruction from the user via the user terminal device 50. The personal information providing apparatus 100 determines whether the user's personal information is able to be provided according to the privacy policy approved by the user and then provides the personal information acquisition device 20 with the personal information acquired from the personal information storage device 90.

Specifically, the personal information exchanging system 1000 according to this exemplary embodiment includes the personal information providing apparatus 100, which provides other devices with personal information, the plurality of personal information acquisition devices 20a to 20n, which acquire personal information from other devices, and the user terminal device 50, which is used by the user to access the personal information acquisition device 20, which are connected to each other via a network 30.

The personal information storage device 90 holds user's personal information. In this exemplary embodiment, the personal information storage device 90 is connected to the personal information providing apparatus 100. The personal information providing apparatus 100 accesses the personal information storage device 90 to provide each personal information acquisition device 20 with personal information upon request from the personal information acquisition device 20 and according to the privacy policy. Although the personal information storage device 90 is formed as an external storage device connected to the personal information providing apparatus 100 in Fig. 1, the personal information storage device 90 is not limited thereto, but may be, for example, a storage device included in the personal information providing apparatus 100.

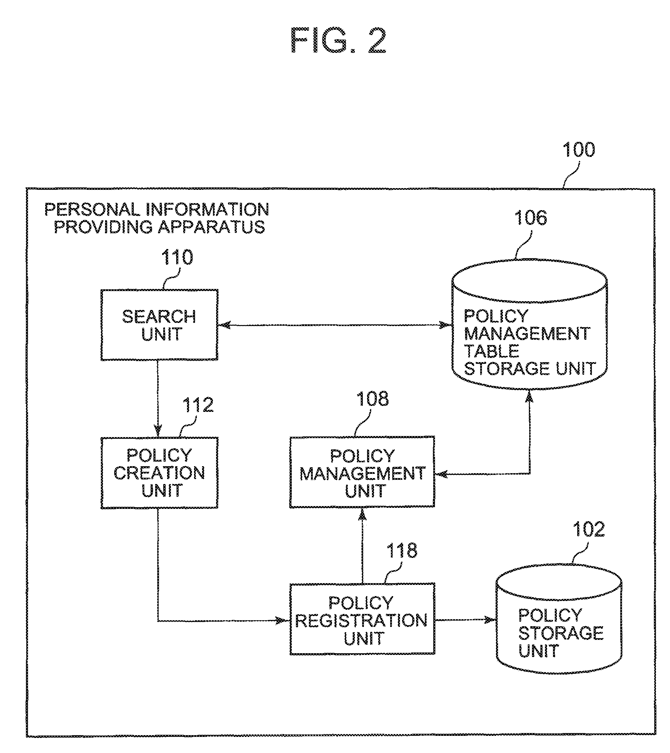

Fig. 2 is a functional block diagram illustrating the configuration of the personal information providing apparatus 100 of the personal information exchanging system 1000 according to an exemplary embodiment of the present invention.
The personal information providing apparatus 100 according to this exemplary embodiment includes: a policy storage device (policy storage unit 102), which stores a privacy policy set for each personal information acquisition device that acquires user's personal information, and for each user; a policy management unit 108, which records and manages identification information that identifies whether the policy storage unit 102 stores the privacy policy in a policy management table (a policy management table storage unit 106) for each personal information acquisition device 20 and for each user; a search unit 110, which searches for the identification information on the privacy policy corresponding to the personal information acquisition device 20 and the user by reference to the policy management table storage unit 106; a policy creation unit 112, which automatically creates a new privacy policy on the basis of a default privacy policy when the identification information on the corresponding privacy policy is not found; and a policy registration unit 118, which stores the created privacy policy into the policy storage unit 102 and notifies the policy management unit 108 of the identification information on the privacy policy to record the identification information into the policy management table storage unit 106.

In this exemplary embodiment, the term "privacy policy" means information, which is to be criteria for the personal information providing apparatus 100 to determine whether a response to a personal information request from the personal information acquisition device 20 is enabled. The criteria for determining whether access to personal information is enabled depends on each personal information acquisition device 20. Therefore, the personal information providing apparatus 100 holds a plurality of privacy policies. Moreover, the privacy policy depends on each user.

The personal information providing apparatus 100 according to this exemplary embodiment includes, for example, a CPU (central processing unit), a memory, a hard disk, and a communication device, which are not illustrated, and is able to be implemented by a server computer, which is connected to an input device such as a keyboard or a mouse and to an output device such as a display or a printer. Then, the CPU reads and executes a program stored in the hard disk, thereby enabling the implementation of the respective functions of the above units 108, 110, 112, and 118. In the respective drawings described hereinafter, the constituent features that will not be essentially related to the gist of the present invention are omitted and not illustrated.

Also, each of the constituents of the personal information providing apparatus 100 is implemented by an arbitrary combination of hardware and software including, at the center thereof, a CPU of an arbitrary computer, a memory, a program that implements the constituents of the present drawings and that is loaded on the memory, a storage unit such as a hard disk that stores the program, and an interface for connection to the network. Then, those skilled in the art will understand that there may be various modifications to the method of implementation thereof, and the apparatus. Each of the drawings described in the following illustrates a block of a functional unit rather than the construction of a hardware unit.

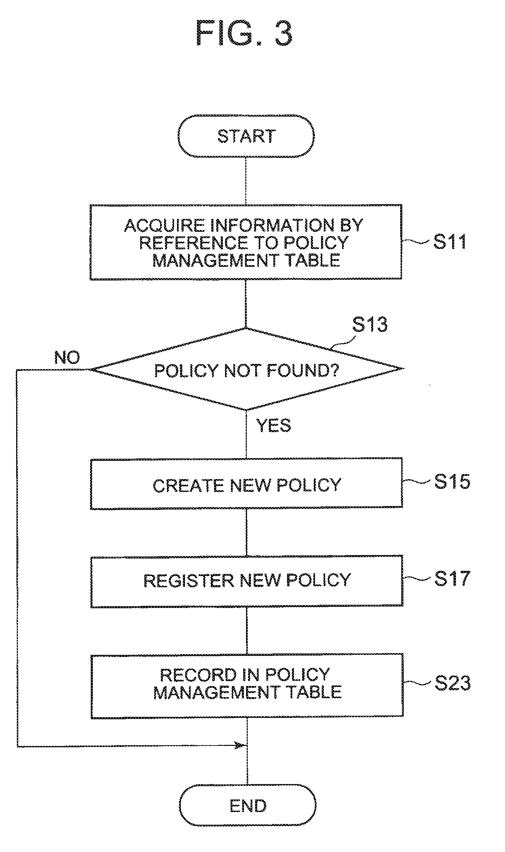

Fig. 3 is a flowchart illustrating an example of the operation of the personal information providing apparatus 100 according to this exemplary embodiment. A computer program according to this exemplary embodiment is a computer program for causing a computer to implement the personal information providing apparatus 100. The computer includes the policy storage unit 102 that stores a privacy policy set for each personal information acquisition device 20, which acquires user's personal information, and for each user. The computer program is described to cause the computer to perform: a policy management procedure (step S23) for recording and managing identification information, which is used to identify whether a privacy policy is stored in the policy storage unit 102, in the policy management table storage unit 106 for each personal information acquisition device 20 and for each user; a search procedure (step S11) for searching for identification information on the privacy policy corresponding to the personal information acquisition device 20 and the user by reference to the policy management table storage unit 106; a policy creation procedure (step S15) for automatically creating a new privacy policy on the basis of a default privacy policy when the identification information on the corresponding privacy policy is not found (YES in step S13); and a policy registration procedure (step S23) for storing the created privacy policy into the policy storage unit 102 (step S17) and recording the identification information on the privacy policy into the policy management table storage unit 106.

As illustrated in Fig. 2, specifically, the personal information providing apparatus 100 according to this exemplary embodiment includes the policy storage unit 102, the policy management table storage unit 106, the policy management unit 108, the search unit 110, the policy creation unit 112, and the policy registration unit 118.

The policy storage unit 102 stores the privacy policy of the personal information for each personal information acquisition device 20 and for each user. In this exemplary embodiment, the policy storage unit 102 stores an approved privacy policy, which is approved by the user.

The policy management table storage unit 106 stores identification information enabling identification of the storage location of a privacy policy, such as the storage location of the privacy policy to be criteria for determining whether access is enabled from the personal information acquisition device 20 to personal information in the personal information storage device 90, which stores the user's personal information, for each user and for each personal information acquisition device 20.

The policy management unit 108 records and manages identification information enabling identification of the storage location of a privacy policy, such as the storage location of the privacy policy, for each user and for each personal information acquisition device 20, in the policy management table storage unit 106.

The search unit 110 searches for the holding location of a privacy policy, which is necessary to determine whether the access is enabled by reference to the policy management table storage unit 106. Although Fig. 2 does not illustrate a search instruction given to the search unit 110, for example, as described later, when one personal information acquisition device 20 requests personal information, the search unit 110 searches for the privacy policy in order to determine whether the personal information is able to be provided to the personal information acquisition device 20. Alternatively, it is also possible to previously perform the searches collectively, with respect to the personal information acquisition devices 20 likely to be provided with user's personal information specified by a user or manager, and then to create privacy policies for the respective personal information acquisition devices 20. Therefore, the control of the search unit 110 is able to be triggered by a request for personal information or an instruction for creating a privacy policy.

The policy creation unit 112 creates a new privacy policy on the basis of a default privacy policy. In this exemplary embodiment, the policy creation unit 112 automatically creates a new privacy policy if the search unit 110 does not find the information on the storage location of the corresponding privacy policy. Here, it is assumed that the default privacy policy is previously set by a user or the like and stored in a memory (not illustrated).

In the personal information providing apparatus 100 according to this exemplary embodiment, the policy creation unit 112 may automatically create a privacy policy as a default privacy policy on the basis of a privacy policy stored in the policy storage unit 102.

For example, the policy creation unit 112 is able to create a new privacy policy by duplicating a user's privacy policy already registered for another personal information acquisition device 20. In the case where a plurality of privacy policies corresponding to a user have already been registered, it is possible to duplicate a privacy policy, which is selected in reverse chronological order of registered or updated date or in predetermined order of priority, as original.

The policy registration unit 118 stores the privacy policy automatically created by the policy creation unit 112 into the policy storage unit 102 and notifies the policy management unit 108 of the information on the storage location of the privacy policy to record the information into the policy management table storage unit 106.

With the above configuration, a data processing method of the personal information providing apparatus 100 according to this exemplary embodiment will be described below. Hereinafter, Figs. 1 to 3 are used for the description.
The data processing method according to this exemplary embodiment is intended for the personal information providing apparatus 100. The personal information providing apparatus 100 includes the policy storage unit 102, which stores the privacy policy set for each personal information acquisition device 20, which acquires user's personal information, and for each user. The personal information providing apparatus 100 records and manages the identification information, which is used to identify whether the privacy policy is stored in the policy storage unit 102, in the policy management table storage unit 106 for each personal information acquisition device 20 and for each user (step S23), refers to the policy management table storage unit 106, searches for the identification information on the privacy policy corresponding to the personal information acquisition device 20 and the user (step S11), automatically creates a new privacy policy (step S15) on the basis of a default privacy policy if the identification information on the corresponding privacy policy is not found (YES in step S13), stores the created privacy policy into the policy storage unit 102 (step S17), and records the identification information on the privacy policy into the policy management table storage unit 106 (step S23).

The operation of the personal information providing apparatus 100 configured as described above will be described below. Hereinafter, the description will be made with reference to Figs. 1 to 3.
The personal information providing apparatus 100 according to this exemplary embodiment manages privacy policies with the following operation. For example, at the time of receiving a request for personal information from the personal information acquisition device 20 or the like, there is a need for a privacy policy to determine whether the request is enabled.

Therefore, first, the personal information providing apparatus 100 uses the search unit 110 to refer to the policy management table storage unit 106 to obtain the information on the location and state of the privacy policy (step S11). As described above, the policy management table storage unit 106 stores identification information enabling the identification of the storage location of a privacy policy, such as the storage location of the privacy policy to be criteria for determining whether access is enabled from the personal information acquisition device 20 to personal information in the personal information storage device 90, which stores user's personal information, for each user and for each personal information acquisition device 20.

If it is determined from the identification information that the policy storage unit 102 stores the user's privacy policy searched for, which is to be used for the personal information acquisition device 20 (NO in step S13), the privacy policy is used to determine whether the access is enabled. Therefore, the personal information providing apparatus 100 then acquires the identification information, namely, the storage location of the privacy policy and ends this processing.

On the other hand, if the corresponding privacy policy is not found in the policy storage unit 102 (YES in step S13), the policy creation unit 112 creates a new policy (step S15) on the basis of a default privacy policy, and the policy registration unit 118 registers the created privacy policy in the policy storage unit 102 (step S17).

Then, the policy registration unit 118 notifies the policy management unit 108 of the information on the location where privacy policy is stored and the information is recorded into the policy management table storage unit 106 (step S23). This notifies the policy management unit 108 of the presence of the policy for the requesting entity, by which the privacy policy is used to determine whether access is enabled.

As described hereinabove, according to the personal information providing apparatus 100 of this exemplary embodiment, it is possible to manage a privacy policy required to be set for each personal information acquisition device 20 and for each user and to create a privacy policy automatically on the basis of a default privacy policy when a required privacy policy is not found, which leads to impressive savings in the effort of the setting operation of the user's privacy policy. In the case of a large number of personal information acquisition devices 20, the user can save or herself the effort of setting the policy for each device, and further the privacy policy is created on the basis of a default policy previously set by the user and therefore it is possible to use the privacy policy on the assumption that user's consent is obtained.

### (Second exemplary embodiment)

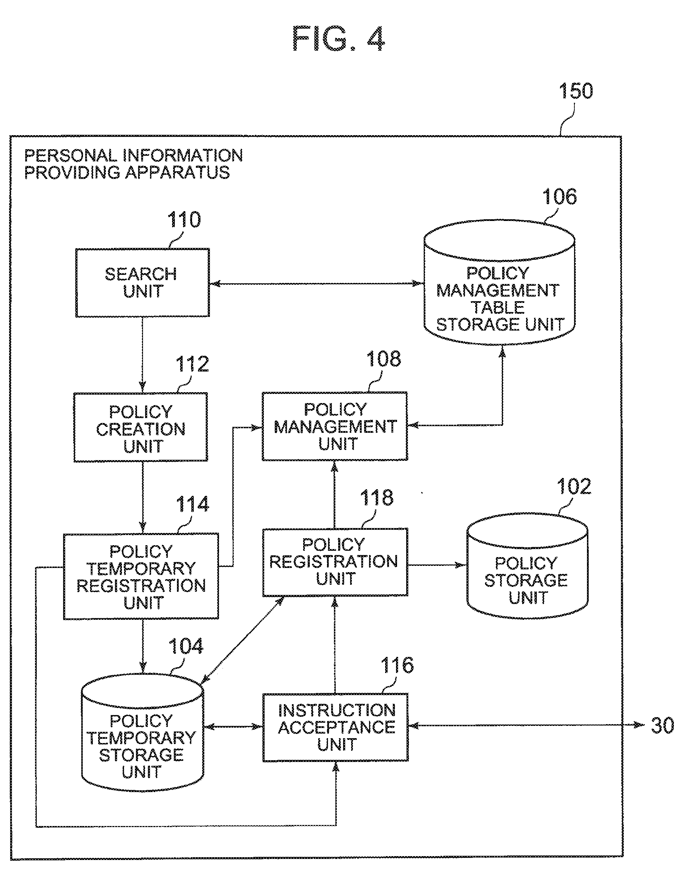

Fig. 4 is a functional block diagram illustrating the configuration of a personal information providing apparatus 150 according to this exemplary embodiment. The personal information providing apparatus 150 according to this exemplary embodiment differs from the personal information providing apparatus 100 according to the above exemplary embodiment in that the policy created by the policy creation unit 112 is temporarily registered for the time being and then formally registered after users approval is obtained. A personal information exchanging system (not illustrated) according to this exemplary embodiment includes the personal information providing apparatus 150, instead of the personal information providing apparatus 100 in Fig. 1. Hereinafter, the personal information providing apparatus 100 in Fig. 1 is replaced with the personal information providing apparatus 150 in describing this exemplary embodiment with reference to Figs. 1 and 4.

The personal information providing apparatus 150 according to this exemplary embodiment further includes: a policy temporary storage device (the policy temporary storage unit 104) that temporarily stores a privacy policy not approved by a user; a policy temporary registration unit 114 that temporarily stores the privacy policy created by the policy creation unit 112 as an unapproved privacy policy into the policy temporary storage unit 104 and notifies the policy management unit 108 of the identification information on the privacy policy to record the identification information into the policy management table storage unit 106; and an instruction acceptance unit 116 that presents the unapproved privacy policy temporarily registered in the policy temporary storage unit 104 to the user, confirms whether the use of the privacy policy is approved, and accepts the instruction from the user. When the unapproved privacy policy temporarily registered in the policy temporary storage unit 104 is approved by the user, the policy registration unit 118 stores the privacy policy as an approved privacy policy into the policy storage unit 102 and notifies the policy management unit 108 of the identification information on the privacy policy to record the identification information into the policy management table storage unit 106.

Moreover, in the personal information providing apparatus 150 according to this exemplary embodiment, the identification information, which is recorded and managed in the policy management table storage unit 106 by the policy management unit 108 for each personal information providing apparatus 200 and for each user, includes information that identifies whether the privacy policy is stored in the policy storage unit 102 or in the policy temporary storage unit 104, and the instruction acceptance unit 116 may determine whether the corresponding privacy policy is stored in the policy temporary storage unit 104 on the basis of the retrieved identification information, present the unapproved privacy policy temporarily registered in the policy temporary storage unit 104 to the user, confirm whether the use of the privacy policy is approved, and accept the instruction from the user.

Specifically, in addition to the constituents of the personal information providing apparatus 100 in Fig. 2, the personal information providing apparatus 150 according to this exemplary embodiment further includes the policy temporary storage unit 104, the policy temporary registration unit 114, and the instruction acceptance unit 116.

The policy temporary storage unit 104 temporarily stores an unapproved privacy policy, which is not approved by the user.
Although the policy storage unit 102 and the policy temporary storage unit 104 are storage units different from each other in this exemplary embodiment, this is merely a logical distinction. Physically, different regions in the same storage device may be used, instead, or there is no need to particularly separate the region as long as it is possible to store information that enables identification of whether privacy policies are approved or unapproved in association with the privacy policies. Specifically, in the policy management table storage unit 106, the privacy policies may be managed with the storage locations thereof associated with the information for use in identifying whether the privacy policies are approved or unapproved.

The policy temporary registration unit 114 temporarily stores the unapproved privacy policy automatically created by the policy creation unit 112 and notifies the policy management unit 108 of the information on the storage location of the privacy policy to record the information into the policy management table storage unit 106.

The instruction acceptance unit 116 presents the unapproved privacy policy, which has been temporarily registered in the policy temporary storage unit 104, to the user, seeks the user's consent related to the privacy policy, and accepts an instruction on whether the privacy policy is approved from the user. The term "usher" here means a principal of personal information. Moreover, although not illustrated, the instruction acceptance unit 116 is connected to the user terminal device 50 via the network 30 and is able to present an operation screen on a display device (not illustrated) of the user terminal device 50. Further, the user operates an operating unit (not illustrated) to perform an input or an instruction operation, and the instruction acceptance unit 116 accepts the user's input or instruction at the user terminal device 50 via the network 30.

As for the timing when the user's operation is made at the user terminal device 50, various situations are possible. For example, when the user at the terminal device 50 applies to the personal information acquisition device 20 for the use of service, it is conceivable that the personal information acquisition device 20 inquires user's personal information from the personal information providing apparatus 150. In that case, it is possible to seek the user's consent by shifting the site where the user at the user terminal device 50 apples the personal information acquisition device 20 for the use of service to a page of the site of the personal information providing apparatus 150 such as, for example, the Internet provider and causing the user terminal device 50 to display an operation screen.

In another case, when time is required for approval at the personal information acquisition device 20 after the user applies for the use of service, it is also conceivable that the personal information acquisition device 20 inquires user's personal information from the personal information providing apparatus 150 separately later. In that case, the personal information providing apparatus 150 may transmit an e-mail with the URL address of the site related to the setting of the privacy policy to the e-mail address or the like, which has been previously registered as user's contact information in the personal information acquisition device 20. The user receives the e-mail at the user terminal device 50 and accesses the site of the URL address described in the e-mail, thereby enabling the setting screen, related to the privacy policy to be displayed on the user terminal device 50. Thereby, it is possible to obtain an answer of user's approval or disapproval for the policy from the user terminal device 50.

In this exemplary embodiment, the policy registration unit 118 stores the temporarily-registered privacy policy, which has been approved by the user, into the policy storage unit 102 and notifies the policy management unit 108 of the information on the storage location of the privacy policy to record the information in the policy management table storage unit 106.

In this exemplary embodiment, the CPU (not illustrated) of the personal information providing apparatus 150 executes a computer program, thereby enabling the respective functions of the above units 108 to 118 to be implemented.

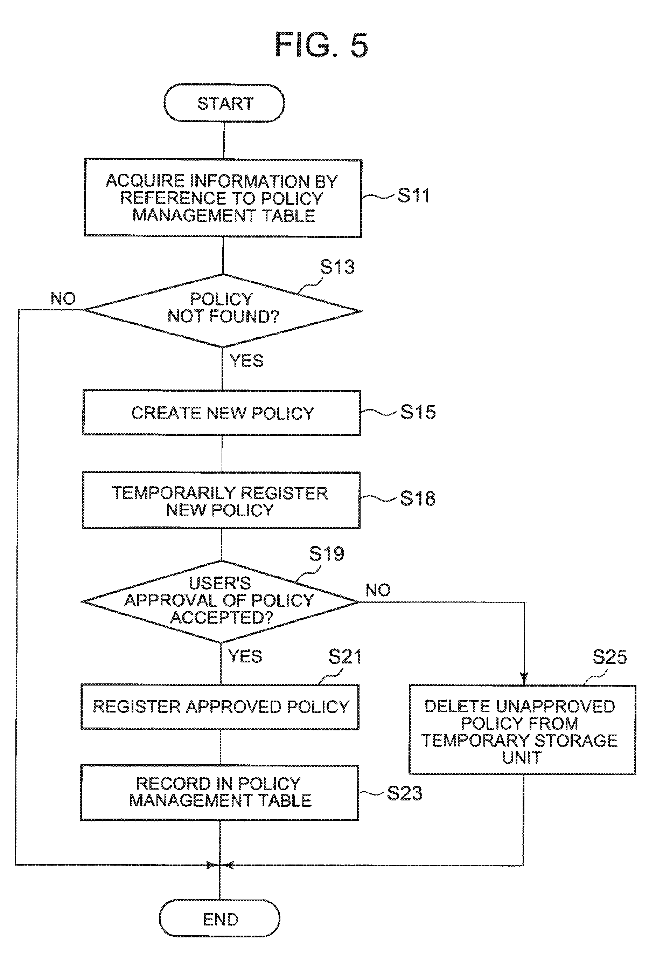

Fig. 5 is a flowchart illustrating an example of the operation of the personal information providing apparatus 150 according to this exemplary embodiment. The computer program according to this exemplary embodiment is described to cause a computer to further perform: a policy temporary registration procedure (step S18) for temporarily storing the privacy policy, which has been created in the policy creation procedure (step S15), as an unapproved privacy policy into the policy temporary storage unit 104 and causing the identification information on the privacy policy to be stored into the policy management table storage unit 106; an instruction acceptance procedure (step S19) for presenting the unapproved privacy policy temporarily registered in the policy temporary storage unit 104 to the user, confirming with the user whether to approve the use of the privacy policy, and accepting an instruction from the user; a procedure (step S21) for storing the unapproved privacy policy as an approved privacy policy into the policy storage unit 102 at the time when the user approves the unapproved privacy policy temporarily registered in the policy temporary storage unit 104; and a procedure (step S23) for recording the identification information on the privacy policy into the policy management table storage unit 106.

Further, the computer program according to this exemplary embodiment may be described so that, in the policy management procedure (step S23), the identification information recorded and managed in the policy management table storage unit 106 for each personal information acquisition device 20 and for each user includes information that identifies whether the privacy policy is stored in the policy storage unit 102 or in the policy temporary storage unit 104, and may be described to cause the computer to perform a procedure (step S19) for determining (not illustrated) that the corresponding privacy policy is stored in the policy temporary storage unit 104 on the basis of retrieved identification information, presenting the unapproved privacy policy temporarily registered in the policy temporary storage unit 104 to the user, confirming with the user whether to approve the use of the privacy policy, and accepting an instruction from the user.

With the above configuration, a data processing method of the personal information providing apparatus 150 according to this exemplary embodiment will be described below. Hereinafter, Figs. 4 and 5 are used for the description.
In the data processing method of the personal information providing apparatus 150 according to this exemplary embodiment, the created privacy policy is temporarily stored as an unapproved privacy policy into the policy temporary storage unit 104, the identification information on the privacy policy is recorded into the policy management table storage unit 106 (step S18), the unapproved privacy policy temporarily registered in the policy temporary storage unit 104 is presented to the user, and whether the use of the privacy policy is approved is confirmed, and an instruction is accepted from the user (step S19). Further, when the user approves the unapproved privacy policy temporarily registered in the policy temporary storage unit 104, the privacy policy is stored as an approved privacy policy into the policy storage unit 102, and then the identification information on the privacy policy is recorded into the policy management table storage unit. 106.

Moreover, in the data processing method of the personal information providing apparatus 150 according to this exemplary embodiment, the identification information recorded and managed in the policy management table storage unit 106 for each personal information acquisition device 20 and for each user may include information that identifies whether the privacy policy is stored in the policy storage unit 102 or in the policy temporary storage unit 104, it is determined that the corresponding privacy policy is stored in the policy temporary storage unit 104 on the basis of retrieved identification information (not illustrated), the unapproved privacy policy temporarily registered in the policy temporary storage unit 104 is presented to the user, whether the use of the privacy policy is approved is confirmed, and an instruction is accepted from the user (step S19).

The operation of the personal information providing apparatus 150 with the above configuration will be described below. Hereinafter, Figs. 1, 4, and 5 are used for the description.
The operation of the personal information providing apparatus 150 according to this exemplary embodiment further includes steps S18 to S25 of Fig. 5 in addition to the same steps S11 to S15, and S23 as those in the flowchart of Fig, 3 for the personal information providing apparatus 100 according to the above exemplary embodiment.

After a new policy is created by the policy creation unit 112 in step S15, the policy temporary registration unit 114 temporarily stores the new privacy policy created by the policy creation unit 112 into the policy temporary storage unit 104 (step S18).

Thereafter, the instruction acceptance unit 116 presents the unapproved privacy policy to the user terminal device 50 to seek the user's consent related to the privacy policy. Thereafter, if the instruction acceptance unit 116 accepts the user's consent related to the privacy policy setting from the user terminal device 50 (YES in step S19), the policy registration unit 118 registers the privacy policy, which has been temporarily registered in the policy temporary storage unit 104, into the policy storage unit 102 (step S21). At this time, the privacy policy temporarily registered in the policy temporary storage unit 104 is deleted.

Then, the policy registration unit 118 notifies the policy management unit 108 of the information on the storage location of the privacy policy and the information is recorded into the policy management table storage unit 106 (step S23). This notifies the policy management unit 108 of the presence of the policy to the requesting entity and this information is used to determine whether access is enabled.

Further, if a user's consent is not obtained for the inquiry to the user (NO in step S19), the instruction acceptance unit 116 causes the policy temporary registration unit 114 to delete the privacy policy temporarily registered in the policy temporary storage unit 104 (step S25). Then, the policy management unit 108 is notified of the absence of the privacy policy to the requesting entity and this information is used to determine whether access is enabled.

As described hereinabove, the personal information providing apparatus 150 of this exemplary embodiment has the same advantageous effect as that of the personal information providing apparatus 100 of the above exemplary embodiment and the use of the privacy policy created anew is enabled after the user's approval is obtained.

Moreover, since the user's confirmation is obtained without fail before setting a privacy policy, it is possible to prevent an apparatus, which provides personal information, from using a privacy policy that is against the user's intention. Therefore, personal information is able to be exchanged among entities on the basis of the user's intension.

### (Third exemplary embodiment)

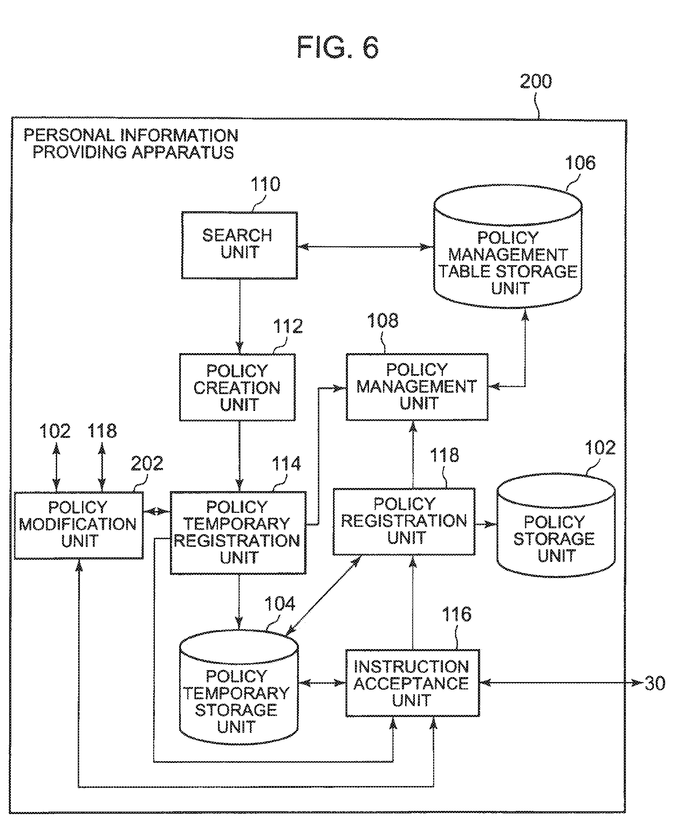

Fig. 6 is a functional block diagram illustrating the configuration of a personal information providing apparatus 200 according to this exemplary embodiment. The personal information providing apparatus 200 according to this exemplary embodiment differs from the personal information providing apparatus 100 and the personal information providing apparatus 150 according to the above exemplary embodiments in that the apparatus accepts alterations or settings of the privacy policy from the user. Hereinafter, the personal information providing apparatus 200 in Fig. 6 will be described by using an example of a configuration in which a policy modification unit 202 is added to the configuration of the personal information providing apparatus 150.

In addition to the configuration of the personal information providing apparatus 150 of the above exemplary embodiment, the personal information providing apparatus 200 of this exemplary embodiment further includes the policy modification unit 202 that accepts an instruction for modifying the privacy policy stored in a policy storage unit 102 from the user and modifies the privacy policy on the basis of the accepted modification instruction.

Further, in the personal information providing apparatus 200 of this exemplary embodiment, the policy modification unit 202 accepts an instruction for modifying a privacy policy, which is an instruction accepted by an instruction acceptance unit 116 and disapproved by the user, from the user and modifies the privacy policy on the basis of the accepted modification instruction, and a policy temporary registration unit 114 temporarily stores the modified privacy policy into the policy temporary storage unit 104 and notifies a policy management unit 108 of the identification information on the privacy policy to record the identification information into a policy management table storage unit 106.

In addition, if the personal information providing apparatus 200 has a configuration in which the policy modification unit 202 is added to the configuration of the personal information providing apparatus 100, the policy registration unit 118 stores the modified privacy policy into the policy storage unit 102 and notifies the policy management unit 108 of the identification information on the privacy policy to record the identification information into the policy management table storage unit 106.

In the personal information providing apparatus 200 having the above configuration, if NO is selected in step S19 of Fig. 5 in the personal information providing apparatus 150 of the above exemplary embodiment, the privacy policy is able to be modified to the user's intended content, instead of deleting the privacy policy.

Specifically, in the step of obtaining the user's consent, the user is able to set the user's own policy, the instruction acceptance unit 116 accepts the setting content, and the policy modification unit 202 modifies the privacy policy according to the setting content. The setting of the privacy policy by the user is able to be implemented by providing a screen for setting from the personal information providing apparatus 200 via the network 30 and performing user's operation on the user terminal device 50. The setting content input via the setting screen on the user terminal device 50 is transmitted to the personal information providing apparatus 200 via the network 30 and then accepted by the instruction acceptance unit 116,

The modified privacy policy is temporarily and temporarily registered in the policy temporary storage unit 104 by the policy temporary registration unit 114. Then, the policy management unit 108 is notified of the privacy policy and the privacy policy is recorded into the policy management table storage unit 106.

Here, the temporarily-registered privacy policy is present in the policy temporary storage unit 104. The users consent to this privacy policy, however, is not obtained yet, and therefore as in the temporary registration of the new privacy policy described above, the instruction acceptance unit 116 seeks the user's consent related to the temporarily-registered privacy policy from the user terminal device 50 and then accepts an instruction from the user. If the user consents, the policy registration unit 118 registers the privacy policy, which has been temporarily stored in the policy temporary storage unit 104, into the policy storage unit 102. Then, the policy registration unit 118 notifies the policy management unit 108 of the identification information on the privacy policy to record the identification information into the policy management table storage unit 106.

On the other hand, unless the user consents, the privacy policy in the policy temporary storage unit 104 is deleted. Then, the policy management unit 108 is notified of the absence of the privacy policy to the requesting entity and this information is used to determine whether access is enabled. Further, although not illustrated, the user is also able to suspend the approval for this setting and may approve the setting later.

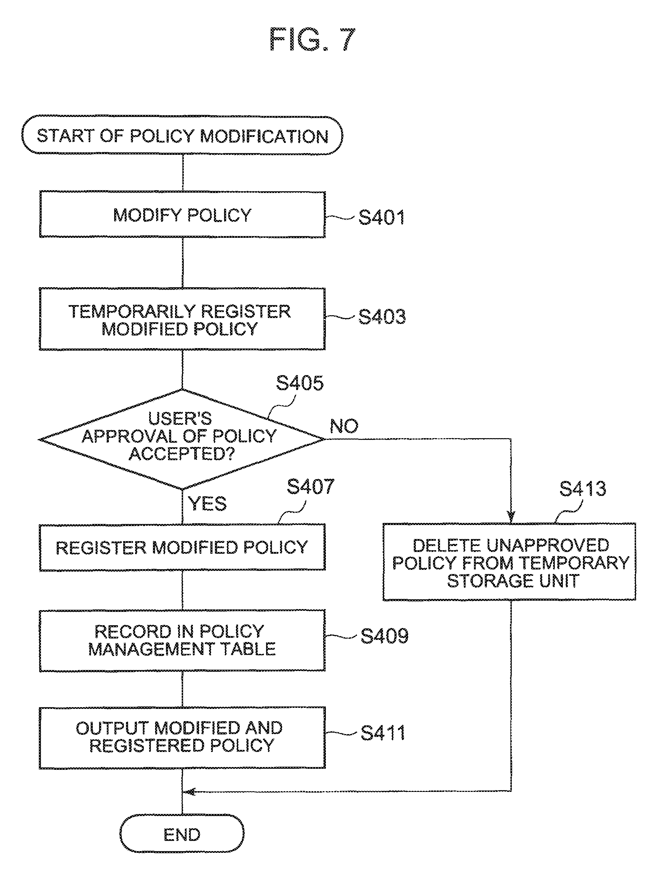

Fig. 7 is a flowchart illustrating an example of a detailed processing flow of policy modification processing of the personal information providing apparatus 200 according to this exemplary embodiment. Hereinafter, the description will be made with reference to Figs. 6 and 7. In this exemplary embodiment, the CPU of the personal information providing apparatus 200 executes a computer program, thereby enabling the respective functions of the above units 108 to 118 and 202 to be implemented. In addition to the procedures (steps S11 to S25 in Fig. 5) of the computer program for the personal information providing apparatus 150 of the above exemplary embodiment, the computer program of this exemplary embodiment is described to cause a computer to perform: a policy modification procedure (step S401) for accepting an instruction for modifying the privacy policy disapproved by the user (NO in step S19 of Fig. 5) for the instruction accepted in the instruction acceptance procedure (step Ski.9 of Fig. 5) in the policy modification processing and modifying the privacy policy on the basis of the accepted modification instruction; and a procedure (step S403) for temporarily storing the modified privacy policy into the policy temporary storage unit 104 and recording the identification information on the privacy policy into the policy management table storage unit 106.

With the above configuration, a data processing method of the personal information providing apparatus 200 according to this exemplary embodiment will be described below. Hereinafter, Figs. 6 and 7 are used for the description.
In the data processing method of the personal information providing apparatus 200 according to this exemplary embodiment, an instruction for modifying a privacy policy, which is disapproved by the user in the accepted instruction (NO in step s19 of Fig. 5), from the user, the privacy policy is modified on the basis of the accepted modification instruction (step S401), the modified privacy policy is temporarily stored in the policy temporary storage unit 104, and the identification information on the privacy policy is recorded into the policy management table storage unit 106 (step S403).

The operation of the personal information providing apparatus 200 according to this exemplary embodiment having the above configuration will be described below. Hereinafter Figs. 6 and 7 are used for the description.
First, the instruction acceptance unit 116 accepts the setting content of the privacy policy, which has been uniquely set or modified by the user, and the policy modification unit 202 modifies the privacy policy according to the setting content (step S401).

Then, the modified privacy policy is temporarily and temporarily registered in the policy temporary storage unit 104 by the policy temporary registration unit 114 (step S403).
Here, the temporarily-registered privacy policy is present in the policy temporary storage unit 104. The user's consent to this privacy policy, however, is not obtained yet, and therefore as in the temporary registration of the new privacy policy described above, the instruction acceptance unit 116 seeks the user's consent related to the temporarily-registered privacy policy from the user terminal device 50 and then accepts an instruction from the user (step S405). Of the user consents (YES in step S405), the policy registration unit 118 registers the privacy policy, which has been temporarily stored in the policy temporary storage unit 104, into the policy storage unit 102 (step S407). Then, the policy registration unit 118 notifies the policy management unit 108 of the identification information on the privacy policy to record the identification information into the policy management table storage unit 106 (step S403). This notifies the policy management unit 108 of the presence of the policy to the requesting entity (step S411) and this information is used to determine whether access is enabled.

On the other hand, if a user's consent is not obtained for the inquiry to the user in step S405 (NO in step S405), the instruction acceptance unit 116 causes the policy temporary registration unit 114 to delete the privacy policy temporarily registered in the policy temporary storage unit 104 (step S413). Then, the policy management unit 108 is notified of the absence of the privacy policy to the requesting entity and this information is used to determine whether access is enabled. If the user makes an instruction to suspend the approval of the modified privacy policy, the privacy policy temporarily registered in the policy temporary storage unit 104 is not deleted, but the policy management unit 108 is notified and caused to record the storage location of the corresponding privacy policy into the policy management table storage unit 106.

As described hereinabove, according to the personal information providing apparatus 200 of this exemplary embodiment, an appropriate privacy policy is able to be set by a user while minimising the burden on the user. Then, the privacy policy set by the user is able to be reflected on other personal information acquisition devices 20 specified by the user. This enables the user to set the privacy policy for other personal information acquisition devices 20 by one-time operation and significantly reducing the burden on the user for operation.

Moreover, the content of the privacy policy set by the user is able to be reflected on other privacy policies related to the corresponding user, which have already been managed by the apparatus. Further, for reflecting a result of the alteration of the privacy policy, the personal information providing apparatus 200 is able to accept processing related to the user's consent without fail.

### (Fourth exemplary embodiment)

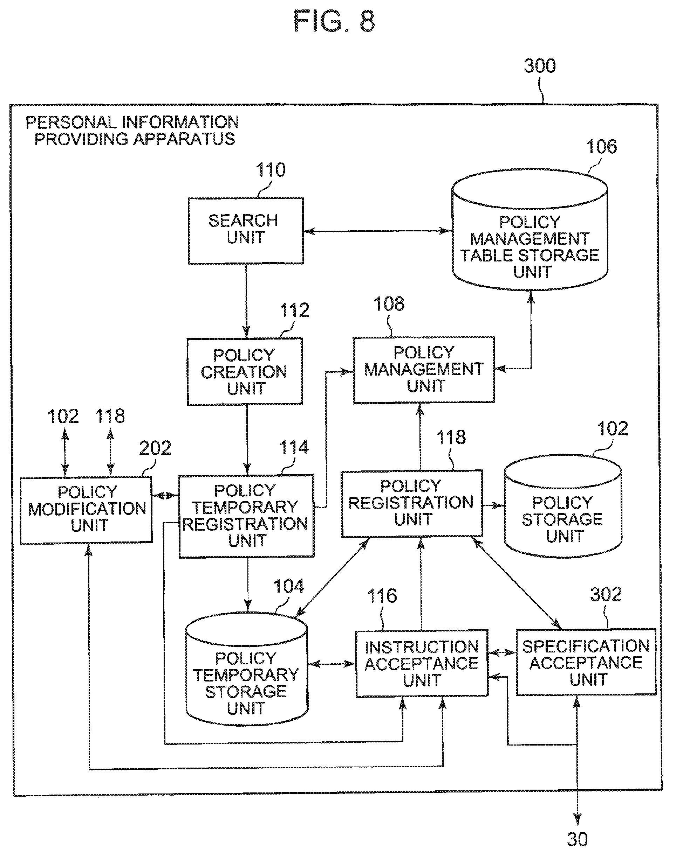

Fig. 8 is a functional block diagram illustrating the configuration of a personal information providing apparatus 300 according to this exemplary embodiment. The personal information providing apparatus 300 of this exemplary embodiment differs from the personal information providing apparatus 200 of above exemplary embodiment in specifying the personal information acquisition device 20 (See Fig. 1), for which the use of the privacy policy modified by the policy modification unit 202 is approved.

Specifically, when setting a policy (privacy policy) for use in user's determination of whether to enable access to the personal information, there is a need to set the privacy policy for each device to which the personal information is distributed. The higher the number of devices, however, the operations of setting the privacy policy increases. Therefore, it is inefficient to set the privacy policy for all devices.

Therefore, in the personal information providing apparatus 300 of this exemplary embodiment, when the user sets a privacy policy, the altered content thereof is reflected on other privacy policies set by the user in modifying the privacy policies. When using the modified privacy policy, the personal information providing apparatus 300 obtains user's confirmation once and then uses the modified policy only if the user consents to the use of the modified privacy policy, by which the user is able to cause the content of a policy alteration operation to be reflected on all privacy policies only by performing the alteration operation only once.

The personal information providing apparatus 300 of this exemplary embodiment further includes a specification acceptance unit 302 that accepts a specification of the personal information acquisition device 20, for which the use of the modified and temporarily-registered privacy policy is approved, from a user. The policy registration unit 118 stores the modified and temporarily-registered privacy policy, as an approved privacy policy for the personal information acquisition device 20 for which the use is approved on the basis of the user's specification, into the policy storage unit 102 and notifies the policy management unit 108 of the identification information on the privacy policy to record the identification information into the policy management table storage unit 106.

Further, if the personal information providing apparatus 300 of this exemplary embodiment is a variation of the personal information providing apparatus 100 illustrated in Fig. 1, the specification acceptance unit 302 may accept the specification of the personal information acquisition device 20, for which the privacy policy modified by the policy modification unit 202 is automatically used, from the user, and the policy registration unit 118 is able to automatically use the privacy policy modified by the policy modification unit 202 as a privacy policy for the specified personal information acquisition device 20 according to the specification accepted by the specification acceptance unit 302.

Although the specification acceptance unit 302 is added to the configuration of the personal information providing apparatus 200 of the exemplary embodiment illustrated in Fig. 6 in this exemplary embodiment, the configuration of the present invention is not limited thereto. The specification acceptance unit 302 or the like may be added to the configuration of the personal information providing apparatus illustrated in Fig. 2 or Fig. 4. In other words, in the personal information providing apparatus, it is possible to specify a personal information acquisition device 20 on which the registration content of a privacy policy registered anew is reflected.

In this exemplary embodiment, the CPU of the personal information providing apparatus 300 executes a computer program, thereby enabling the implementation of the respective functions of the above units 108 to 118, 202, and 302. In addition to the procedures (steps S11 to S25 of Fig. 5) of the computer program for the personal information providing apparatus 150 of the above exemplary embodiment, the computer program of this exemplary embodiment is described to cause a computer to further perform: a specification acceptance procedure (not illustrated) for accepting the specification of the personal information acquisition device 20, for which the use of the modified and temporarily-registered privacy policy is approved, from a user; and a policy registration procedure (not illustrated) for storing the modified and temporarily-registered privacy policy as an approved privacy policy for the personal information acquisition device 20, for which the use of the privacy policy is approved, into the policy storage unit 102 on the basis of the user's specification and recording the identification information on the privacy policy into the policy management table storage unit 106.

With the above configuration, a data processing method of the personal information providing apparatus 300 according to this exemplary embodiment will be described below.
The data processing method of the personal information providing apparatus 300 according to this exemplary embodiment includes: accepting the specification of the personal information acquisition device 20, for which the use of the modified and temporarily-registered privacy policy is approved, from the user; storing the modified and temporarily-registered privacy policy as an approved privacy policy for the personal information acquisition device 20, to which the use of the privacy policy is approved, into the policy storage unit 102 on the basis of the user's specification and recording the identification information on the privacy policy into the policy management table storage unit 106.

As described hereinabove, according to the personal information providing apparatus 300 of this exemplary embodiment, the user is able to specify a personal information acquisition device 20, on which the modification or setting is to be reflected, out of other personal information acquisition devices 20 including the personal information acquisition device 20 in which the privacy policy has already been registered, and it is possible to reflect the privacy policy modified or set by the policy modification unit 202 on the privacy policy of any other specified personal information acquisition device 20 and to register the privacy policy according to the specification.

Specifically, the personal information providing apparatus 300, which provides personal information, needs to determine whether access to the personal information is enabled for each personal information acquisition device 20 in order to protect the user's personal information. Further, since it is impossible to determine whether access is enabled by using a single privacy policy independent of the personal information acquisition device 20, there is a need to set a policy for each personal information acquisition device 20 to which the personal information is sent. Therefore, the higher the number of personal information acquisition devices 20, the operations of setting the policy increases. Accordingly, it has been inefficient to set the policy based on the user's consent according to the personal information acquisition device 20 as a destination of the personal information. Therefore, the system autonomously alters a policy (privacy policy) related to determination of whether access is enabled, which is set for any other device (personal information acquisition device 20), and stores the result of the alteration as a new policy, and thereupon it has been required that the personal information providing apparatus 300 determines whether a user's consent is obtained.

When the user sets a new privacy policy or alters a privacy policy, the personal information providing apparatus 300 of this exemplary embodiment is able to introduce the altered content into other privacy policies. Therefore, the user does not need to set all privacy policies, thereby saving the effort of the user operation of registering privacy policies.

Moreover, the privacy policy set for the specified personal information acquisition device 20 may be suspended as a temporarily-registered privacy policy. Specifically, at the time when the personal information acquisition device 20 is actually provided with the personal information separately later, the privacy policy may be registered after the approval process is performed individually, partially, or wholly.

### (Fifth exemplary embodiment)

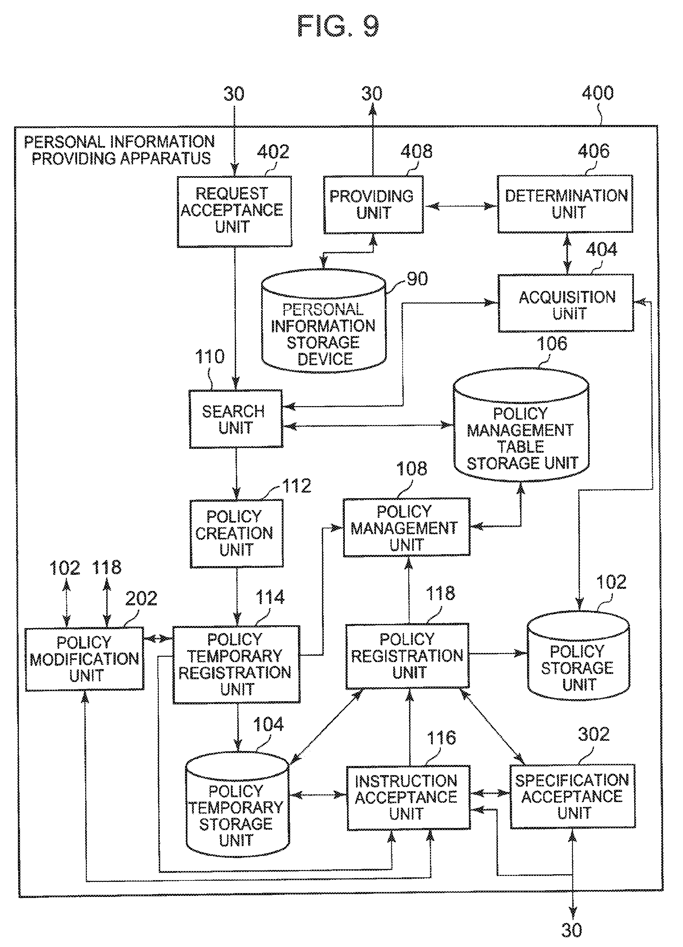

Fig. 9 is a functional block diagram illustrating the configuration of a personal information providing apparatus 400 of according to this exemplary embodiment. The personal information providing apparatus 400 of this exemplary embodiment differs from the personal information providing apparatus 300 of the above exemplary embodiment in that the personal information providing apparatus 400 accepts a request for personal information from the personal information acquisition device 20, acquires the corresponding privacy policy, determines whether access to the requested personal information is enabled, and prohibits the access if the privacy policy is not found.

The personal information providing apparatus 400 of this exemplary embodiment further includes: a request acceptance unit 402 that accepts a request for user's personal information from the personal information acquisition device 20 and causes the search unit 110 to search for identification information on a privacy policy corresponding to the personal information acquisition device 20 and the user; an acquisition unit 404 that acquires the privacy policy from the policy storage unit 102 on the basis of the identification information on the privacy policy retrieved by the search unit 110; a determination unit 406 that determines whether it is possible to comply with the request according to the acquired privacy policy; and a providing unit 408 that provides the requesting personal information acquisition device 20 with the personal information acquired from the personal information storage device 90 which stores the personal information if it is determined that it is possible to comply with the request. Although the personal information storage device 90 is described as a constituent included in the personal information providing apparatus 400 in Fig. 9, the personal information storage device 90 may be a constituent, which is connected to the personal information providing apparatus 400 in the same manner as in other exemplary embodiments, and is not particularly limited to the above.

Specifically, in addition to the configuration of the above exemplary embodiment, the personal information providing apparatus 400 includes a request acceptance unit 402, an acquisition unit 404, a determination unit 406, and a providing unit 408.
Although the request acceptance unit 402 or the like is added to the configuration of the personal information providing apparatus 300 of the exemplary embodiment illustrated in Fig. 8 in this exemplary embodiment, the configuration is not limited thereto. The request acceptance unit 402 may be added to the configuration of the personal information providing apparatus 100, the personal information providing apparatus 150, or the personal, information providing apparatus 200 illustrated in Fig. 2, Fig. 4, or Fig. 6.

The request acceptance unit 402 accepts the request for the user's personal information from one of the personal information acquisition devices 20a to 20n and causes the search unit 110 to search for the identification information on the privacy policy corresponding to the personal information acquisition device 20 and the user. The acquisition unit 404 acquires the privacy policy from the policy storage unit 102 on the basis of the identification information on the privacy policy retrieved by the search unit 110, The acquired privacy policy is used to determine whether the access from the personal information acquisition device 20 is enabled.

The determination unit 406 determines whether it is possible to comply with the request according to the acquired privacy policy, in other words, whether access to the personal information is enabled. If it is determined that it is possible to comply with the request, the providing unit 408 provides the requesting personal information acquisition device 20 with the personal information acquired from the personal information storage device 90, which stores the personal information. In this exemplary embodiment, a response message including the personal information is created and then the created message is transmitted to one of the personal information acquisition devices 20a to 20n, which has requested the information, via the network 30.

On the other hand, for the personal information acquisition device 20, which has not been approved to access to the personal information in the personal information storage device 90 by the determination unit 406, the providing unit 408 creates an error notification message and transmits the created message to one of the personal information acquisition devices 20a to 20n, which has requested the information, via the network 30.

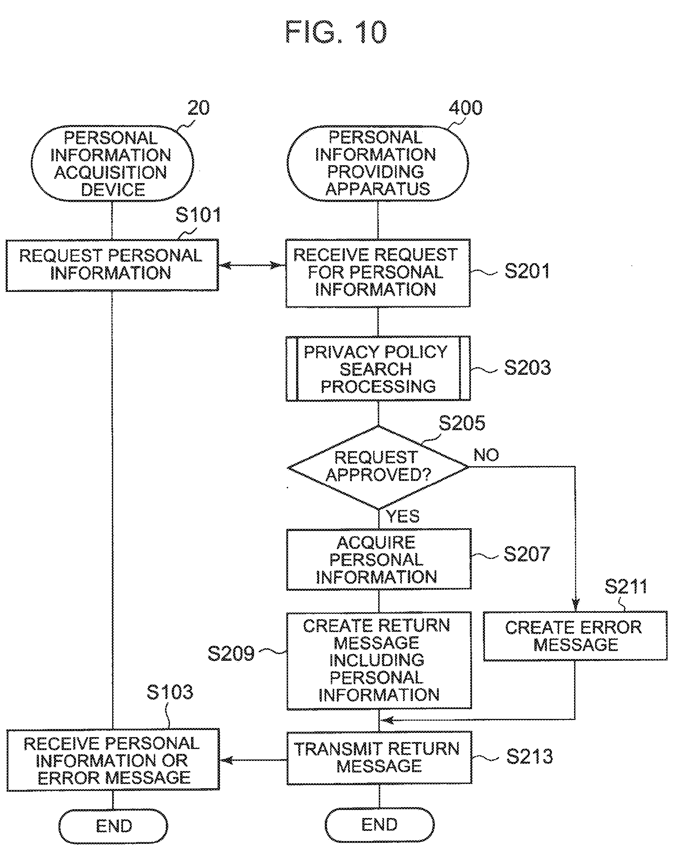

In this exemplary embodiment, the CPU of the personal information providing apparatus 400 executes a computer program, thereby enabling the implementation of the respective functions of the above units 402 to 408.
Fig, 10 is a flowchart illustrating an example of the operation of a personal information acquisition device 20 and the personal information providing apparatus 400 of the personal information exchanging system 1000 according to this exemplary embodiment. Hereinafter, Figs. 9 and 10 are used for the description.

The computer program of this exemplary embodiment is described to cause a computer to further perform: a request acceptance procedure (step S201) for accepting a request for user's personal information from the personal information acquisition device 20 and causing a search for identification information on a privacy policy corresponding to the personal information acquisition device 20 and the user; an acquisition procedure (step S203) for acquiring the privacy policy from the policy storage unit 102 on the basis of the identification information on the privacy policy retrieved by the search; a determination procedure (step S205) for determining whether its possible to comply with the request according to the acquired privacy policy; and a providing procedure (steps S207, S209, and S213) for providing the requesting personal information acquisition device 20 with the personal information acquired from the personal information storage device 90 which stores the personal information if it is determined that it is possible to comply with the request (YES in step S205).

With the above configuration, a data processing method of the personal information providing apparatus 400 according to this exemplary embodiment will be described below. Hereinafter, Figs. 9 and 10 are used for the description.

The data processing method of the personal information providing apparatus 400 according to this exemplary embodiment includes: accepting a request for user's personal information from the personal information acquisition device 20 (step S201) and searching for identification information on a privacy policy corresponding to the personal information acquisition device 20 and a user (step S203); acquiring the privacy policy from the policy storage unit on the basis of the identification information on the privacy policy retrieved by the search (step S203); determining whether it is possible to comply with the request according to the acquired privacy policy (step S205); and providing the requesting personal information acquisition device 20 with the personal information acquired from the personal information storage device 90, which stores the personal information, if it is determined that it is possible to comply with the request (steps S207, S209, and S213).

The operation of the personal information exchanging system according to this exemplary embodiment having the above configuration will be described below. Hereinafter, Figs. 9 to 11 are used for the description.
First, the flow of processing performed between devices will be described with reference to Fig.10. One of the personal information acquisition devices 20a to 20n (hereinafter, referred to as "personal information acquisition device 20x") sends a message that requests personal information to the personal information providing apparatus 400 via the network 30 (step S101). Then, the personal information providing apparatus 400 receives the message requesting personal information via the network 30 (step S201) and makes a response by sending a response message to the requesting message to the personal information acquisition device 20x. Note that this processing depends on the content of the processing previously performed by the personal information providing apparatus 400.

Thereafter, in response to the request received by the request acceptance unit 402, the personal information providing apparatus 400 shifts to the search processing for the privacy policy of the requested personal information by the search unit 110 (step so The details of the privacy policy search processing in step S203 will be described later.

In the search processing in step S203, the search unit 110 outputs the storage location of the privacy policy and the acquisition unit 404 outputs the privacy policy acquired from the policy storage unit 102 on the basis of the storage location by the acquisition unit 404. Then, the determination unit 406 determines whether access to the personal information is enabled on the basis of the content of the acquired privacy policy (step S205).

The access to the personal information is approved in the determination of whether the access is enabled in step S205 (YES in step S205), the providing unit 408 acquires required personal information from the personal information storage device 90 (step S207). Then, the providing unit 408 creates a return message for sending the personal information to the personal information acquisition device 20x (step S209).

On the other hand, if the sending of the personal information is not approved (NO in step S25) as a result of the determination of whether the access is enabled in step S205, the providing unit 408 creates an error message to be sent to the personal information acquisition device 20x (step S211). Thereafter, the providing unit 408 transmits the return message created in step S209 or S211 to the personal information acquisition device 20x via the network 30 (step S213). The personal information acquisition device 20x receives the return message from the personal information providing apparatus 400 via the network 30 (step S103).

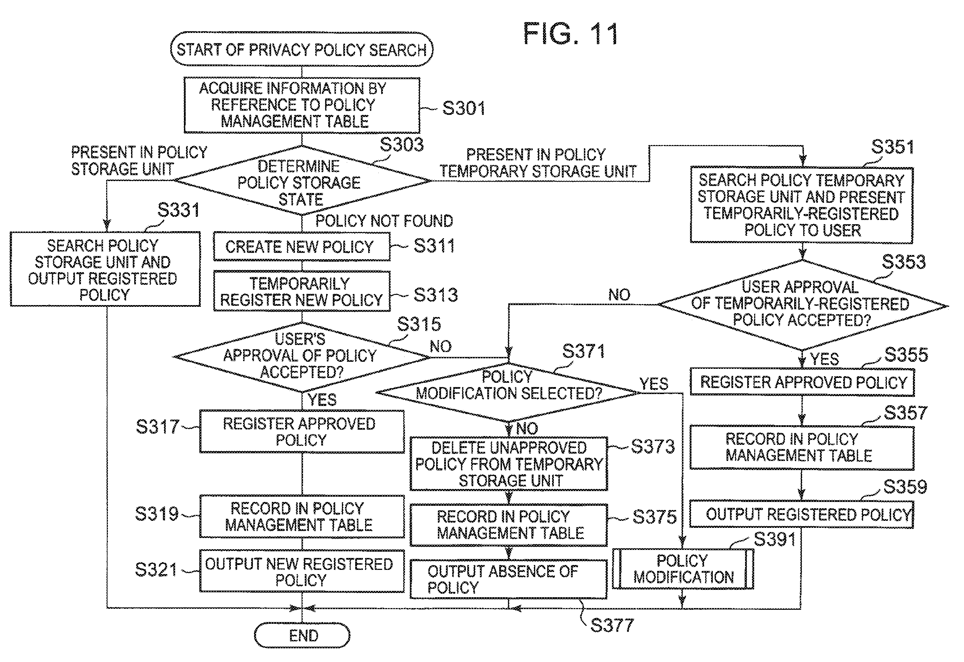

Subsequently, the details of the privacy policy search processing in step S203 will be described with reference to Figs. 11 and 9. In this processing, the search unit 110 acquires the privacy policy, which is used to determine whether the personal information acquisition device 20x is able to access the user's personal information.

First, in the personal information providing apparatus 400, the search unit 110 acquires information retained in the policy management table storage unit 106 (step S301). This information includes where the privacy policy is managed. Subsequently, the search unit 110 determines processing to be performed next according to a situation in which the policy is held (step S303).

In other words, if it is determined that the privacy policy is registered only in the policy storage unit 102 ("present in the policy storage unit" in step S303), the search unit 110 acquires the privacy policy from the policy storage unit 102 on the basis of the acquired storage location of the privacy policy, presents the privacy policy to the providing unit 408 (step S3311, and ends this processing.

If it is determined that there is no privacy policy for the personal information acquisition device 20x, which has sent the request message ("policy not found" in step S303), the policy creation unit 112 creates a new privacy policy for use in presenting user's personal information to the personal information acquisition device 20x (step S311), The created privacy policy is temporarily registered in the policy temporary storage unit 104 by the policy temporary registration unit 114 (step S313).

Thereafter, the instruction acceptance unit 116 presents the privacy policy related to the access to the personal information created in step S311 to the user as a principal of the personal information and sends an inquiry to the user about whether the user consents to this privacy policy (step S315). Unless the user consents to the new privacy policy (NO in step S315), the user needs to define the privacy policy. The instruction acceptance unit 116 confirms with the user whether to modify and reset the privacy policy (step S371). If the user selects to modify the privacy policy (YES in step S371), the control shifts to the privacy policy modification processing by the user (step S391). This modification processing is the same as the processing described in the policy modification processing of the personal information providing apparatus 200 according to the above exemplary embodiment illustrated in Fig. 7, and therefore the detailed description thereof is omitted here.

On the other hand, unless the user selects the modification (NO in step S371), the instruction acceptance unit 116 causes the policy temporary registration unit 114 to delete the privacy policy, which has been temporarily registered in the policy temporary storage unit 104 (step S373). Then, the policy temporary registration unit 114 notifies the policy management unit 108 of the absence of the privacy policy, the information is recorded into the policy management table storage unit 106 (step S375), and this processing ends. This notifies the policy management unit 108 of the absence of the privacy policy for the requesting entity (step S377), and the information is used to determine whether access is enabled.

Although this exemplary embodiment describes a case where the temporarily-registered privacy policy is deleted from the policy temporary storage unit 104 unless the user selects the modification in this exemplary embodiment, the invention is not limited thereto. The privacy policy temporarily registered by the user may not be deleted, but the processing may end with the privacy policy temporarily registered as it is. In this instance, the consent to the privacy policy is suspended for the time being, and at the next time, the processing shifts from the above step S303 to step S351, thereby enabling confirmation with the user whether to consent to the temporarily-registered privacy policy.

On the other hand, if the user consent to the new privacy policy related to the personal information acquisition device 20x in step S315 (YES in step S315), the specification acceptance unit 302 accepts the specification of another personal information acquisition device 20 (assumed to be a personal information acquisition device 20y, here: a plurality of devices can be specified as the personal information acquisition device 20y) on which the new privacy policy related to the personal information acquisition device 20x is to be reflected. Then, the policy registration unit 118 registers the privacy policy, which has been temporarily registered in the policy temporary storage unit 104, as a privacy policy for the specified personal information acquisition devices 20x and 20y, into the policy storage unit 102 (step S317). At this time, the privacy policy temporarily registered in the policy temporary storage unit 1.04 is deleted.

In this manner, the user is able to reflect the setting of the new policy not only on the personal information acquisition device 20x, but also on another personal information acquisition device 20y by one-time operation processing in step S315. In this consent step S315, the user may consent to only a part of privacy policies and may suspend the consent to the remaining privacy policies. Thereafter, at the next time, the processing may shift from the above step S303 to step S351, thereby enabling confirmation with the user whether to consent to the temporarily-registered privacy policies.

Thereafter, the policy registration unit 118 notifies the policy management unit 108 of the information on the storage location of the privacy policy and the information is recorded into the policy management table storage unit 106 (step S319). This notifies the policy management unit 108 of the presence of the privacy policy for the requesting entity (step S321), and this information is used to determine whether access is enabled.

Further, if it is determined that the policy temporary storage unit 104 holds the privacy policy for the personal information acquisition device 20x, which has sent the received request message, in the determination of step S303 ("present in the policy storage unit" in step S303), the search unit 110 acquires the corresponding privacy policy from the policy temporary storage unit 104 on the basis of the acquired storage location of the privacy policy (step S351).

Then, the instruction acceptance unit 116 presents the privacy policy to the user terminal device 50 of the user and then sends an inquiry to the user about whether to consent to the use of the privacy policy in determination of whether to enable access to the personal information (step S353).

If the user consents (YES in step S353), the specification acceptance unit 302 accepts the specification of another personal information acquisition device 20y, on which the privacy policy related to the personal information acquisition device 20x is to be reflected. Then, the policy registration unit 118 registers the privacy policy, which has been temporarily registered in the policy temporary storage unit 104, as a privacy policy for the specified personal information acquisition devices 20x and 20y, into the policy storage unit 102 (step S355). At this time, the privacy policy temporarily registered in the policy temporary storage unit 104 is deleted.
In this manner, the user is able to cause the setting of the privacy policy to be reflected not only on the personal information acquisition device 20x, but also on another personal information acquisition device 20y by one-time operation processing in step S353.

Thereafter, the policy registration unit 118 notifies the policy management unit 108 of the information on the storage location of the privacy policy and the information is recorded into the policy management table storage unit 106 (step S357). This notifies the policy management unit 108 of the presence of the policy for the requesting entity, and the information is used to determine whether access is enabled. Then, the policy management unit 108 is notified of the presence of the privacy policy for the personal information acquisition devices 20x and 20y (step S359), and the information is used to determine whether access is enabled.

On the other hand, unless the user consents in step S353 (NO in step S353), the user needs to define the privacy policy. The subsequent processing is the same as the processing of the above step S371 and subsequent steps, and therefore the detailed description will be omitted here.

As described hereinabove, according to the personal information providing apparatus 400 of this exemplary embodiment, the user is able to cause the privacy policy set by the user to be reflected also on other privacy policies related to the user, thereby reducing the number of times for setting or altering the privacy policy.

Moreover, according to the personal information providing apparatus 400 of this exemplary embodiment, an update is not performed immediately after the privacy policy is altered, but the privacy policy is registered into the policy storage unit 102 only after the user's consent is obtained, thereby preventing a disclosure of the personal information against the user's intention. Further, the user is able to approve only privacy policies required at the present time among a plurality of devices and to suspend the approval for other privacy policies. This enables the user to confirm only the required privacy policies when needed.

### (Sixth exemplary embodiment)

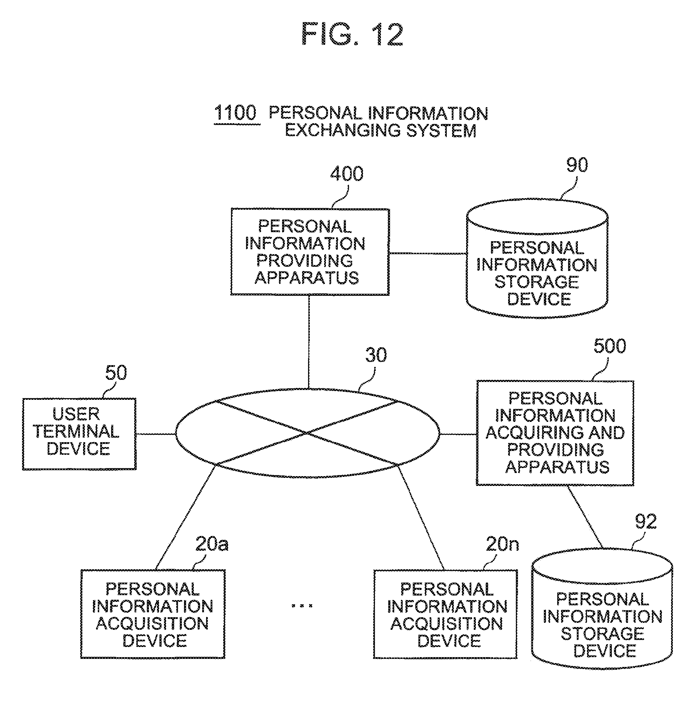

Fig. 12 is a block diagram illustrating the configuration of a personal information exchanging system 1100 according to an exemplary embodiment of the present invention. The personal information exchanging system 1100 of this exemplary embodiment differs from the personal information exchanging system 1000 of the above exemplary embodiment in including a personal information acquiring and providing apparatus 500 in which the function of the personal information acquisition device 20 is added to the configuration of the personal information providing apparatus 400 of the above exemplary embodiment.

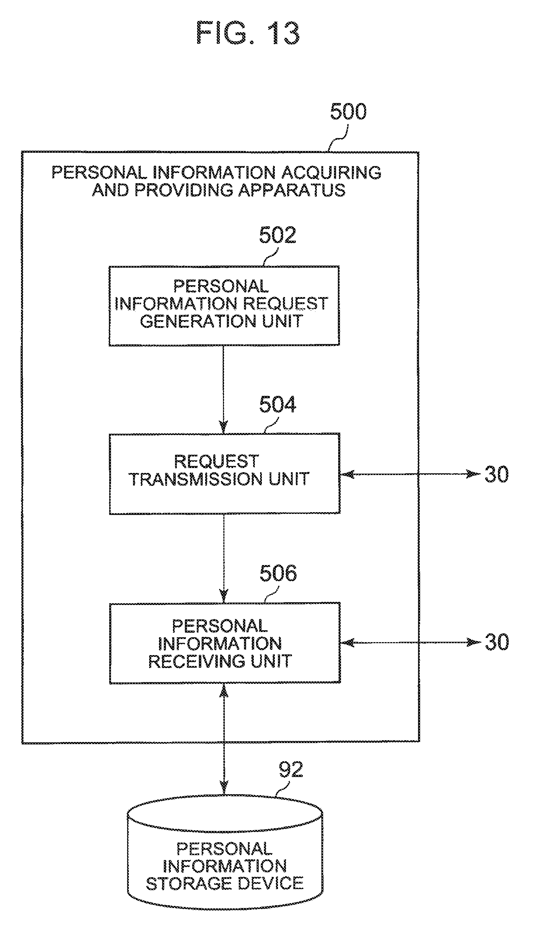

Fig. 13 is a functional block diagram illustrating the configuration of the personal information acquiring and providing apparatus 500 of the personal information exchanging system 1100 of this exemplary embodiment. In this diagram, all of the same components as those of the personal information providing apparatus 400 in Fig. 9 are omitted here. Further, although a personal information storage device 92, which is connected to the personal information acquiring and providing apparatus 500, has a different configuration from the personal information storage device 90 of the personal information providing apparatus 400 in Figs. 12 and 13, the invention is not limited thereto. The personal information storage device 92 may be adapted to provide the information of the personal information storage device 90 in the same manner as in the personal information providing apparatus 400. Moreover, although the personal information storage device 92 of this exemplary embodiment is configured as an external storage device connected to the personal information acquiring and providing apparatus 500, the personal information storage device 92 is not limited thereto, but may be, for example, a storage device included in the personal information acquiring and providing apparatus 500.

In addition to the configuration of the personal information providing apparatus 400 of the above exemplary embodiment, the personal information acquiring and providing apparatus 500 of this exemplary embodiment further includes: a requesting unit (a personal information request generation unit 502 and a request transmission unit 504) that makes a request for the user's personal information to other personal information acquisition devices 20; and a receiving unit (a personal information receiving unit 506) that receives the user's personal information from other personal information providing apparatuses. More specifically, the personal information acquiring and providing apparatus 500 of this exemplary embodiment includes the personal information request generation unit 502, the request transmission unit 504, and the personal information receiving unit 506.

The personal information request generation unit 502 creates a request message for personal information to be sent to the personal information providing apparatus 400. The request transmission unit 504 transmits the message generated by the personal information request generation unit 502 to the personal information providing apparatus 400 via the network 30. The personal information receiving unit 506 receives the personal information from the personal information providing apparatus 400 via the network 30 and registers the personal information into the personal information storage device 92.

In this exemplary embodiment, the CPU of the personal information acquiring and providing apparatus 500 executes a computer program, thereby enabling the implementation of the respective functions of the above units 502 to 506.

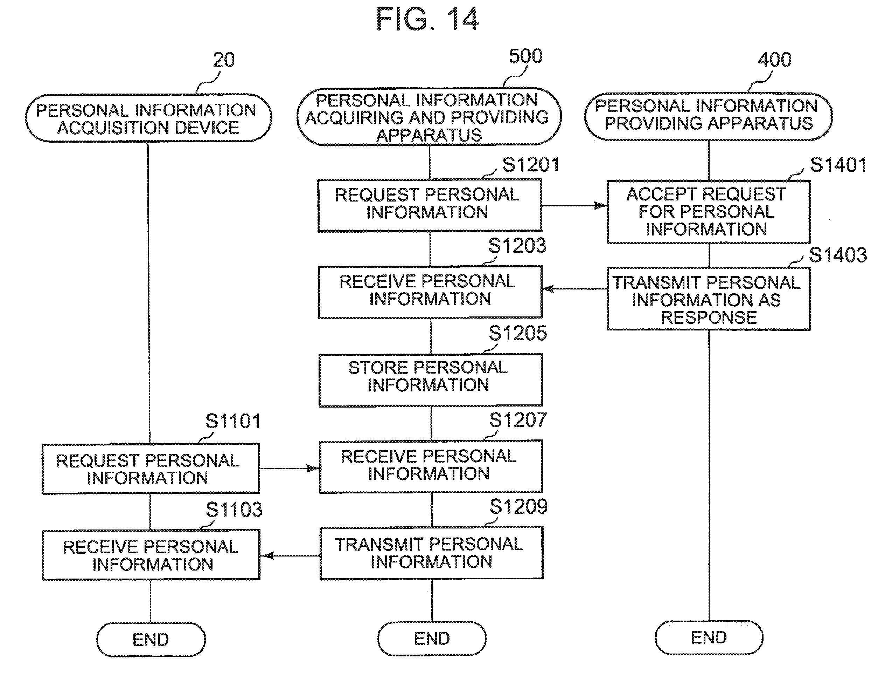

Fig. 14 is a flowchart illustrating an example of the operation of the personal information exchanging system 1100 of this exemplary embodiment. The computer program of this exemplary embodiment is described to cause a computer to further perform: a requesting procedure for requesting user's personal information from the personal information providing apparatus 400 (step S1201); and a receiving procedure for receiving the user's personal information from the personal information providing apparatus 400 (step S1203),

Further, with the above configuration, a data processing method of the personal information acquiring and providing apparatus 500 of the personal information exchanging system 1100 according to this exemplary embodiment will be described below. Hereinafter, Figs. 13 and 14 are used for the description.

The data processing method of the personal information acquiring and providing apparatus 500 according to this exemplary embodiment includes: requesting user's personal information from the personal information providing apparatus 400 (step S1201); and receiving the user's personal information from the personal information providing apparatus 400 (step S1203).

The operation of the personal information acquiring and providing apparatus 500 of this exemplary embodiment having the above configuration will be described below. Hereinafter, Figs. 13 and 14 are used for the description.
First, the personal information request generation unit 502 of the personal information acquiring and providing apparatus 500 creates a message that requests personal information and the request transmission unit 504 sends the message to the personal information providing apparatus 400 (step S1201). Then, in the personal information providing apparatus 400, the request acceptance unit 402 (See Fig. 9) receives the request (step S1401), the search unit 110 (See Fig, 9) determines whether the sending of the personal information is enabled according to the privacy policy, and then the providing unit 408 (See Fig.9) sends the personal information to the personal information acquiring and providing apparatus 500 on the basis of the message (step S1403). The details of search or other processing of personal information in the personal information providing apparatus 400 have already been described in the above exemplary embodiment and therefore are omitted here. This exemplary embodiment differs from the above exemplary embodiment only in that the transmission processing in the personal information providing apparatus 400 is intended for the personal information acquiring and providing apparatus 500 though the transmission processing in personal information providing apparatus 400 is intended for the personal information acquisition device 20 in the above exemplary embodiment.

Then, in the personal information acquiring and providing apparatus 500, the personal information receiving unit 506 receives the personal information from the personal information providing apparatus 400 via the network 30 (step S1203) and then stores the personal information into the personal information storage device 92 (step S1205). Thereafter, the personal information acquisition device 20x transmits a request for the personal information to the personal information acquiring and providing apparatus 500 as needed (step S1101).

The personal information acquiring and providing apparatus 500 prepares the personal information in response to the request from the personal information acquisition device 20x (step S1207). Then, as described for the personal information providing apparatus 400 in the above exemplary embodiment, the providing unit 408 in Fig. 9 transmits the personal information to the personal information acquisition device 20x via the network 30 (step S1209). This transmission processing of the personal information is the same as for the personal information providing apparatus 400 in the above exemplary embodiment, and therefore the detailed description thereof is omitted here. The personal information acquisition device 20x receives the personal information from the personal information acquiring and providing apparatus 500 (step S1103). Alternatively, in the same manner as in the processing described for the personal information providing apparatus 400, if it is determined that the provision of the personal information is not enabled in the determination of whether access to the personal information is enabled in the personal information acquiring and providing apparatus 500, the personal information acquiring and providing apparatus 500 transmits a message notifying the personal information acquisition device 20x of the information.

As described hereinabove, according to the personal information exchanging system 1100 of this exemplary embodiment, the device that has acquired personal information operates as a device that provides the personal information. Therefore, it is possible to save the effort of the user operation of registering personal information in respective devices and to simplify user processing. Moreover, the personal information providing apparatus does not need to concentrate on managing personal information, and therefore the personal information exchanging system 1100 is applicable to a distributed environment in which a plurality of devices manage personal information.

Although the preferred exemplary embodiments of the present invention have been described with reference to the drawings hereinabove, the above-described exemplary embodiments are merely illustrative of the present invention and various configurations other than the above can also be employed.

For example, in the personal information providing apparatus 100 according to the above exemplary embodiments, the policy registration unit 118 also may automatically use the modified privacy policy as a privacy policy for another personal information acquisition device 20, store the privacy policy modified as the privacy policy for another personal information acquisition device 20 into the policy storage unit 102, and notify the policy management unit 108 of the identification information on the privacy policy to record the identification information into the policy management table storage unit 106.

According to this configuration, the modified privacy policy is able to be automatically used for the privacy policy for another personal information acquisition device 20.

### Examples

### Example 1

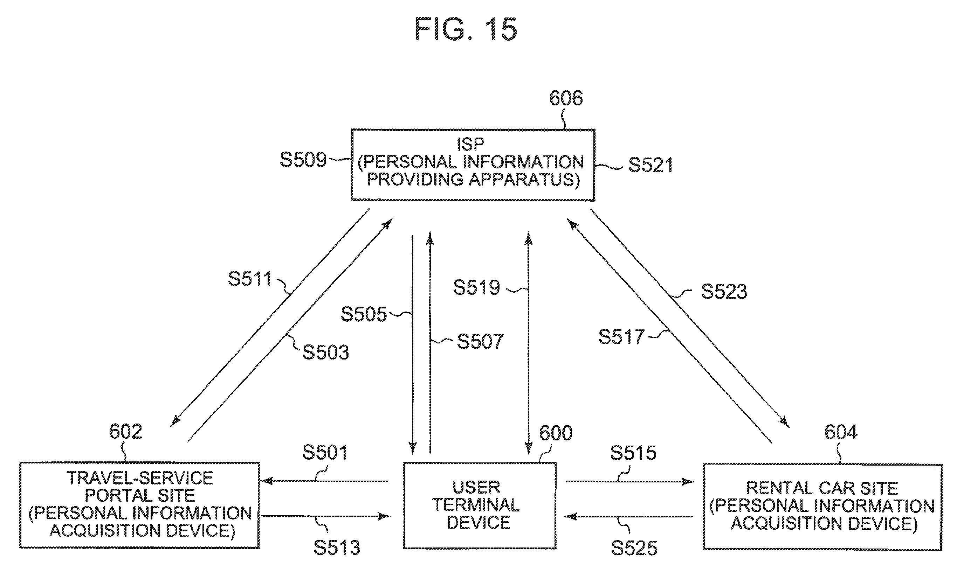

Hereinafter, working examples of the personal information exchanging system according to the present invention will be described with reference to Figs. 15 to 18. The exemplary embodiment is described as a working example of the personal information providing apparatus 400 of the personal information exchanging system 1000 according to the above exemplary embodiment, and Figs. 1 and 9 are used for the description.

As illustrated in Fig. 15, the personal information exchanging system includes; an Internet service provider (ISP) 606, which manages user information on the Internet and acts as a personal Information providing apparatus 400, which provides the user information to other devices; a travel-service portal site 602, which acts as a personal information acquisition device 20 (See Fig, 1); a rental car site 604, which acts as a personal information acquisition device 20; and a user terminal device 600 (corresponding to the user terminal device 50 illustrated in Fig, 1), which receives a service via the network 30 (See Fig. 1). In this exemplary embodiment, a user uses services provided by the travel-service portal site 602 and the rental car site 604 via the user terminal device 600. When using any of the services, the user uses personal information held by the ISP 606.

For example, the travel-service portal site 602 and the rental car site 604 acquire the address or telephone number, which is user's contact information, by using personal information held by the ISP 606. In this exemplary embodiment, it is assumed that the ISP 606 previously has a privacy policy for the rental car site 604, but does not have a privacy policy set for the travel-service portal site 602. In this situation, the travel-service portal site 602 and the rental car site 604 acquire personal information.

First, the user (user ID: 0001) accesses the service of the travel-service portal site 602 via the user terminal device 600 and performs a travel reservation procedure (step S501 in Fig. 15). At this time, the travel-service portal site 602 requires contact address information and requests the information from the ISP 606 (step S503). In the ISP 606, the request acceptance unit 402 (See Fig. 9) accepts the request, and thereupon the search unit 110 (See Fig. 9) checks the policy management table storage unit 106 (See Fig. 9)

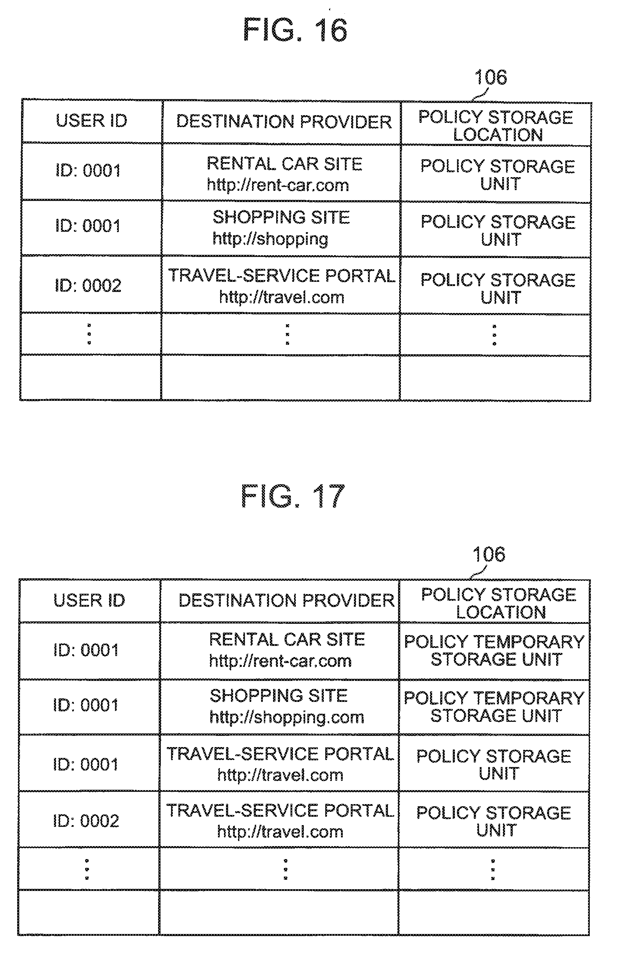

At this time, the policy management table storage unit 106 manages the privacy policy for each user, for example, as illustrated in Fig. 16. Unless the ISP 606 has a privacy policy related to the user (ID: 0001) set for the travel-service portal site 602 as illustrated in Fig, 16, the policy creation unit 112 (See Fig. 9) creates a new privacy policy and notifies the user of the privacy policy via the user terminal device 600 (step S505). Upon receiving the notification of the privacy policy, the user determines whether to approve the privacy policy or to set another policy by him- or herself and notifies the ISP 606 of a result of the determination (step S507).

In this specification, it is assumed that the user sets the privacy policy by him- or herself. Then, the policy registration unit 118 (See Fig, 9) of the ISP 606 registers the policy set by the user into the policy storage unit 102 (See Fig, 9). Further, if necessary, the ISP 606 alters the privacy policies for other devices according to the specification accepted by the specification acceptance unit 302 (See Fig. 9). Here, it is assumed that the user has made an instruction that the set privacy policy is reflected also on other devices. With respect to the alteration of the privacy policies for other devices, it is assumed that the user's consent to each privacy policy is not confirmed yet at this time. Therefore, the privacy policies for other devices are temporarily held in the policy temporary storage unit 104 and maintained to be temporarily registered. The policy management unit 108 alters the information on the storage location of the privacy policy in the policy management table storage unit 106 (step S509).

The information registered in the policy temporary storage unit 104 (See Fig. 9) is a new privacy policy, which has the same structure as the privacy policy stored in the policy storage unit 102 (See Fig. 9). Further, information stored in the policy management table storage unit 106 (See Fig. 9), which manages the state of an updated policy is, for example, information illustrated in Fig. 17 and it is understood that the information is updated from the information in Fig. 16.

Next, the ISP 606 determines whether to send a response to the personal information request from the travel-service portal site 602 on the basis of the privacy policy set by the user. If it is determined that the sending of the response is enabled, the ISP 606 sends the personal information (step S511). The travel-service portal site 602 that acquired the personal information provides the service to the user terminal device 600 (step S513).

Subsequently, the user accesses the rental car site 604 via the user terminal device 600 (step S515). This rental car site 604 requests personal information necessary to provide the user with the service from the ISP 606 (step S517). In the ISP 606, the request acceptance unit 402 (See Fig. 9) acquires the personal information request from the rental car site 604, and thereupon the search unit 110 searches for the privacy policy (See Fig. 9).

Since the privacy policy for the rental car site 604 is present in the policy temporary storage unit 104 (See Fig. 9) as illustrated in Fig. 17 in this phase, the privacy policy is acquired. A user's consent to this policy is not obtained yet with respect to the altered content as described above, and therefore the instruction acceptance unit 116 (See Fig. 9) seeks the user's consent via the user terminal device 600 (step S519).

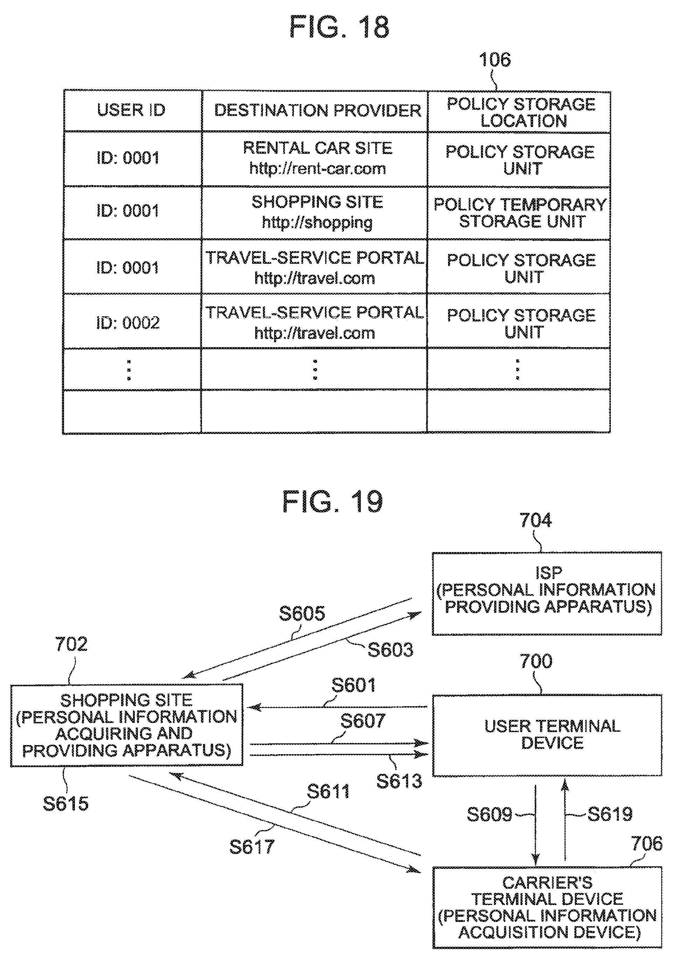

If the user consents, here, the ISP 606 registers the altered privacy policy in the policy storage unit 102 (See Fig.9) and alters the content of the policy management table storage unit 106 as illustrated in Fig. 18 (step S521)_{,} Thereafter, the ISP 606 determines whether the personal information is able to be sent to the rental car site 604 on the basis of the privacy policy. If it is determined that the personal information is able to be sent, the ISP 606 sends the personal information to the rental car site 604 (step S523). Upon receiving the personal information, the rental car site 604 sends the service in return to the user terminal device 600 by using the personal information (step S525).

### Example 2

Subsequently, another working example of the present invention will be described with reference to Figs. 19 to 22. This working example corresponds to the personal information exchanging system 1100 of the above exemplary embodiment. Hereinafter, Figs. 9 and 12 are also used for the description.

As illustrated in Fig. 19, this working example includes: an Internet service provider (ISP) 704, which acts as a personal information providing apparatus 400 (See Fig. 12), which manages user information on the Internee and provides the user information to other devices; a shopping site 702, which acts as a personal information acquiring and providing apparatus 500 (See Fig. 12); a carrier's terminal device 706, which acts as a personal information acquisition device 20 (See Fig. 12); and a user terminal device 700 (corresponding to the user terminal device 50 illustrated in Fig. 12), which receives a service via a network.

This working example shows processing in which a user accesses the shopping site 702 via the user terminal device 700, shops on the site by using personal information in the ISP 704, and makes a request to the carrier's terminal device 706 for delivering goods. In this working example, it is assumed that the ISP 704 previously has a privacy policy for the shopping site 702, but the shopping site 702 does not have a privacy policy for the carrier's terminal device 706. In this situation, the shopping site 702 acquires personal information from the ISP 704 and the carrier's terminal device 706 acquires the personal information from the shopping site 702.

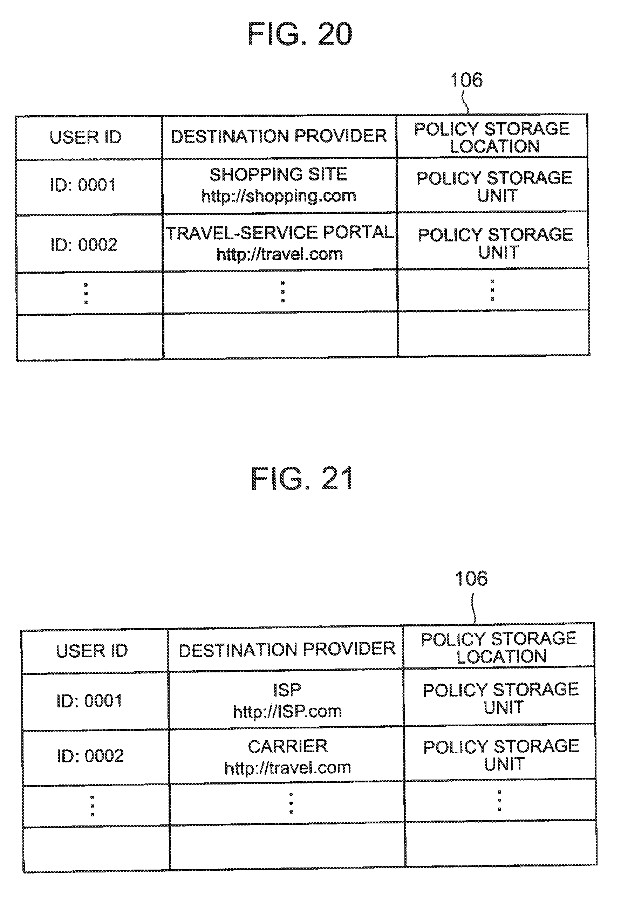

First, the user (user ID: 0001) accesses the service of the shopping site 702 via the user terminal device 700 and buys goods (step S601 in Fig. 19). At this time, the shopping site 702 requires contact address information and the request transmission unit 504 (See Fig. 13) requests the information from the ISP 704 (step S603). In the ISP 704, the request acceptance unit 402 (See Fig. 9) accepts the request, and thereupon the search unit 110 (See Fig. 9) is used to check the policy management table storage unit 106 (See Fig. 9). At this time, the policy management table storage unit 106 manages the privacy policies such as, for example, those illustrated in Fig. 20.

As illustrated in Fig. 20, the ISP 704 has the privacy policy of the corresponding user for the shopping site 702. Therefore, the ISP 704 determines whether to send a response to the personal information request from the shopping site 702 on the basis of the privacy policy set by the user. If it is determined that the sending is enabled, the ISP 704 sends the personal information (step S605). The personal information receiving unit 506 (See Fig. 13) of the shopping site 702 acquires the personal information and then provides the user terminal device 700 with the service (step S607).

Subsequently, the user accesses the carrier's terminal device 706 via the user terminal device 700 and makes a request to the carrier's terminal device 706 for delivering goods (step S609). This carrier's terminal device 706 requests personal information, such as a destination address, which is necessary to provide the user with the service, from the shopping site 702 (step S611). In the shopping site 702, the request acceptance unit 402 (See Fig. 9) acquires the request for the personal information from the carrier's terminal device 706, and thereupon the search unit 110 (See Fig. 9) searches for the privacy policy. In this phase, as illustrated in Fig. 21, the privacy policy of the user (ID: 0001) for the carrier's terminal device 706 is not found in the policy management table storage unit 106 of the shopping site 702. Therefore, the shopping site 702 creates a new privacy policy and confirms with the user (step S613).

If the user consents to providing the personal information on the basis of the new privacy policy, the shopping site 702 registers the privacy policy in the policy storage unit 102 (See Fig. 9) and alters the information in the policy management table storage unit 106 as illustrated in Fig. 22 (step S615). Thereafter, the shopping site 702 determines whether the personal information is able to be sent to the carrier's terminal device 706 on the basis of the privacy policy. If it is determined that the sending is enabled, the shopping site 702 sends the personal information (step S617). Upon receiving the personal information, the carrier's terminal device 706 notifies the user terminal device 700 of the completion of the acceptance of the request for the delivery (step S619).

### Industrial Applicability

The present invention is applicable to uses such as a program for a device, which manages or uses personal information to set a privacy policy. Moreover, the present invention is also applicable to uses such as provisioning of a privacy policy in a portal service, which intensively manages personal information.

While the present invention has been described with reference to exemplary embodiments and working examples thereof, the invention is not limited to these exemplary embodiments and working examples. It will be understood by those skilled in the art that various changes and modifications in form and details may be made therein without departing from the scope of the present invention as defined by the claims.

This application claims the right of priority based on Japanese Patent Application No. 2008-311966, filed on Dec. 8, 2008, which is herein incorporated in its entirety by reference.

### Reference Signs List

- 1000: Personal information exchanging system
- 20: Personal information acquisition device
- 30: Network
- 50: User terminal device
- 90: Personal information storage device
- 100: Personal information providing apparatus
- 102: Policy storage unit
- 104: Policy temporary storage unit
- 106: Policy management table storage unit
- 108: Policy management unit
- 110: Search unit
- 112: Policy creation unit
- 114: Policy temporary registration unit
- 116: Instruction acceptance unit
- 118: Policy registration unit
- 150: Personal information providing apparatus
- 200: Personal information providing apparatus
- 202: Policy modification unit
- 300: Personal information providing apparatus
- 302: Specification acceptance unit
- 400: Personal information providing apparatus
- 402: Request acceptance unit
- 404: Acquisition unit
- 406: Determination unit
- 408: Providing unit
- 1100: Personal information exchanging system
- 500: Personal information acquiring and providing apparatus
- 92: Personal information storage device
- 502: Personal information request generation unit
- 504: Request transmission unit
- 506: Personal information receiving unit
- 600: User terminal device
- 602: Travel-service portal site
- 604: Rental car site
- 700: User terminal device
- 702: Shopping site
- 706: Carrier's terminal device

## Claims

1. A personal information providing apparatus comprising:
a policy storage device that stores a privacy policy set for each personal information acquisition device, which acquires user's personal information, and for each user;
policy management means for recording and managing identification information, which identifies whether the privacy policy is stored in the policy storage device, in the policy management table for each personal information acquisition device and for each user;
search means for searching for the identification information on the privacy policy corresponding to the personal information acquisition device and the user by reference to the policy management table;
policy creation means for automatically creating a new privacy policy on the basis of a default privacy policy when the identification information of the corresponding privacy policy is not found; and
policy registration means for storing the created privacy policy in the policy storage device and notifying the policy management means of the identification information to record the identification information on the privacy policy in the policy management table.

2. The personal information providing apparatus according to claim 1, wherein the policy creation means automatically creates the privacy policy, as the default privacy policy, on the basis of the privacy policy stored in the policy storage device.

3. The personal information providing apparatus according to claim 1 or 2, further comprising policy modification means for accepting an instruction for modifying the privacy policy stored in the policy storage device from the user and modifying the privacy policy on the basis of the accepted modification instruction, wherein the policy registration means stores the modified privacy policy in the policy storage device and notifies the policy management means of the identification information on the privacy policy of the privacy policy to record the identification information in the policy management table.

4. The personal information providing apparatus according to claim 3, wherein the policy registration means automatically uses the modified privacy policy as the privacy policy of another personal information acquisition device, stores the privacy policy, which is modified as the privacy policy of another personal information acquisition device, in the policy storage device, and notifies the policy management means of the identification, information on the privacy policy to record the identification information in the policy management table.

5. The personal information providing apparatus according to claim 4, further comprising specification acceptance means for accepting a specification of the personal information acquisition device, for which the modified privacy policy is automatically used, from the user, wherein the policy registration means automatically uses the modified privacy policy, as the privacy policy for the specified personal information acquisition device, according to the specification accepted by the specification acceptance means.

6. The personal information providing apparatus according to one of claims 1 to 5, further comprising:
a policy temporary storage device that temporarily stores a privacy policy, which is not approved by the user;
policy temporary registration means for temporarily storing the privacy policy created by the policy creation means, as the unapproved privacy policy, in the policy temporary storage device and notifies the policy management means of the identification information on the privacy policy to record the identification information in the policy management table; and
instruction acceptance means for presenting the unapproved privacy policy, which is temporarily registered in the policy temporary storage device, to the user, confirming with the user whether to approve the use of the privacy policy, and accepting the instruction from the user,
wherein, when the user approves the unapproved privacy policy temporarily registered in the policy temporary storage device, the policy registration means stores the privacy policy, as an approved privacy policy, in the policy storage device and notifies the policy management means of the identification information on the privacy policy to record the identification information in the policy management table.

7. The personal information providing apparatus according to claim 6, wherein:
the identification information, which is recorded and managed by the policy management means in the policy management table for each personal information acquisition device and for each user, includes information that identifies whether the privacy policy is stored in the policy storage device or the policy temporary storage device; and
the instruction acceptance means determines that the corresponding privacy policy is stored in the policy temporary storage device on the basis of the identification information retrieved by the search, presents the unapproved privacy policy temporarily registered in the policy temporary storage device to the user, confirms whether the use of the privacy policy is approved, and accepts the instruction from the user.

8. The personal information providing apparatus according to claim 7, further comprising policy modification means for accepting an instruction for modifying the privacy policy disapproved by the user in the instruction accepted by the instruction acceptance means from the user and modifying the privacy policy on the basis of the accepted modification instruction, wherein the policy temporary registration means temporarily stores the modified privacy policy in the policy temporary storage device and notifies the policy management means of the identification information on the privacy policy to record the identification information in the policy management table.

9. The personal information providing apparatus according to claim 8, further comprising specification acceptance means for accepting a specification of the personal information acquisition device, for which the use of the modified and temporary registration privacy policy is approved, from the user, wherein the policy registration means stores the modified and temporarily-registered privacy policy in the policy storage device as the approved privacy policy for the personal information acquisition device, for which the use of the privacy policy is approved, on the basis of the specification of the user, and notifies the policy management means of the identification information on the privacy policy to record the identification information in the policy management table.

10. The personal information providing apparatus according to one of claims 1 to 9, further comprising:
request acceptance means for accepting a request for user's personal information from the personal information acquisition device and causing the search means to search for the identification information on a privacy policy corresponding to the personal information acquisition device and the user;
acquisition means for acquiring the privacy policy from the policy storage device on the basis of the identification information on the privacy policy retrieved by the search means;
determination means for determining whether it is possible to comply with the request according to the acquired privacy policy; and
providing means for providing the requesting personal information acquisition device with the personal information, which is acquired from the personal information storage device that stores personal information, if it is determined that it is possible to comply with the request.

11. The personal information providing apparatus according to one of claims 1 to 10, further comprising:
requesting means for requesting user's personal information from another personal information providing apparatus; and
receiving means for receiving the user's personal information from another personal information providing apparatus.

12. A personal information exchanging system comprising:
a personal information storage device that stores personal information;
the personal information providing apparatus according to one of claims 1 to 11;
a personal information acquisition device that requests and acquires user's personal information from the personal information providing apparatus; and
a user terminal device of the user,
wherein the personal information providing apparatus confirms with the user of the user terminal device whether to approve the use of the privacy policy of the personal information in response to the request for the personal information from the personal information acquisition device, accepts an instruction from the user via the user terminal device, and provides the personal information acquisition device with the user's personal information acquired from the personal information storage device according to the approved privacy policy.

13. A data processing method for a personal information providing apparatus that includes a policy storage device for storing a privacy policy set for each personal information acquisition device, which acquires the user's personal information, and for each user, the method comprising:
recording and managing identification information, which identifies whether the privacy policy is stored in the policy storage device, in the policy management table for each personal information acquisition device and for each user;
searching for the identification information on the privacy policy corresponding to the personal information acquisition device and the user by reference to the policy management table;
automatically creating a new privacy policy on the basis of a default privacy policy when the identification information on the corresponding privacy policy is not found; and
storing the created privacy policy in the policy storage device and recording identification information on the privacy policy in the policy management table.

14. The data processing method for the personal information providing apparatus according to claim 13, wherein the privacy policy is automatically created, as the default privacy policy, on the basis of the privacy policy stored in the policy storage device.

15. The data processing method for the personal information providing apparatus according to claim 13 or 14, the method further comprising:
accepting an instruction for modifying the privacy policy stored in the policy storage device from the user and modifying the privacy policy on the basis of the accepted modification instruction; and
storing the modified privacy policy in the policy storage device and recording the identification information on the privacy policy in the policy management table.

16. The data processing method for the personal information providing apparatus according to claim 15, wherein the modified privacy policy is automatically used as the privacy policy of another personal information acquisition device, the privacy policy modified as the privacy policy of another personal information acquisition device is stored in the policy storage device, and the identification information is recorded in the policy management table.

17. The data processing method for the personal information providing apparatus according to claim 16, the method further comprising:
accepting a specification of the personal information acquisition device, for which the modified privacy policy is automatically used, from the user; and
automatically using the modified privacy policy, as the privacy policy for the specified personal information acquisition device, according to the accepted specification.

18. The data processing method for the personal information providing apparatus, which further includes a policy temporary storage device that temporarily stores a privacy policy, which is not approved by the user, according to one of claims 13 to 17, the method further comprising:
temporarily storing the created privacy policy, as the unapproved privacy policy, in the policy temporary storage device and recording the identification information on the privacy policy in the policy management table;
presenting the unapproved privacy policy, which is temporarily registered in the policy temporary storage device, to the user, confirming with the user whether to approve the use of the privacy policy, and accepting the instruction from the user; and
when the user approves the unapproved privacy policy temporarily registered in the policy temporary storage device, storing the privacy policy, as an approved privacy policy, in the policy storage device and recording the identification information on the privacy policy in the policy management table.

19. The data processing method for the personal information providing apparatus according to claim 18, wherein:
the identification information, which is recorded and managed in the policy management table for each personal information acquisition device and for each user, includes information that identifies whether the privacy policy is stored in the policy storage device or the policy temporary storage device; and
it is determined that the corresponding privacy policy is stored in the policy temporary storage device on the basis of the identification information retrieved by the search, the unapproved privacy policy temporarily registered in the policy temporary storage device is presented to the user to confirm with the user whether to approve the use of the privacy policy, and the instruction is accepted from the user.

20. The data processing method for the personal information providing apparatus according to claim 19, further comprising:
accepting an instruction for modifying the privacy policy disapproved by the user in the accepted instruction and modifying the privacy policy on the basis of the accepted modification instruction; and
temporarily storing the modified privacy policy in the policy temporary storage device and recording the identification information on the privacy policy in the policy management table.

21. The data processing method for the personal information providing apparatus according to claim 20, further comprising:
accepting a specification of the personal information acquisition device, for which the use of the modified and temporarily-registered privacy policy is approved, from the user; and
storing the modified and temporarily-registered privacy policy in the policy storage device as the approved privacy policy for the personal information acquisition device, for which the use of the privacy policy is approved, on the basis of the specification of the user and recording the identification information on the privacy policy in the policy management table.

22. The data processing method for the personal information providing apparatus according to one of claims 13 to 21, further comprising:
accepting a request for user's personal information from the personal information acquisition device and searching for the identification information on a privacy policy corresponding to personal information acquisition device and the user;
acquiring the privacy policy from the policy storage device on the basis of the identification information on the privacy policy retrieved by the search;
determining whether it is possible to comply with the request according to the acquired privacy policy; and
providing the requesting personal information acquisition device with the personal information, which is acquired from the personal information storage device that stores personal information, if it is determined that it is possible to comply with the request.

23. The data processing method for the personal information providing apparatus according to one of claims 13 to 22, further comprising:
requesting user's personal information from another personal information providing apparatus; and
receiving the user's personal information from another personal information providing apparatus.

24. A computer program for causing a computer to implement a personal information providing apparatus, the computer program causing the computer that includes a policy storage device for storing a privacy policy set for each personal information acquisition device, which acquires user's personal information, and for each user to perform:
a policy management procedure for recording and managing identification information, which identifies whether the privacy policy is stored in the policy storage device, in the policy management table for each personal information acquisition device and for each user;
a search procedure for searching for the identification information on the privacy policy corresponding to the personal information acquisition device and the user by reference to the policy management table;
a policy creation procedure for automatically creating a new privacy policy on the basis of a default privacy policy when the identification information on the corresponding privacy policy is not found; and
a policy registration procedure for storing the created privacy policy in the policy storage device and recording the identification information on the privacy policy in the policy management table.

25. The computer program according to claim 24 for causing the computer to perform a procedure for automatically creating the privacy policy, as the default privacy policy, on the basis of the privacy policy stored in the policy storage device in the policy creation procedure.

26. The computer program according to claim 24 or 25 for causing the computer to further perform:
a policy modification procedure for accepting an instruction for modifying the privacy policy stored in the policy storage device from the user and modifying the privacy policy on the basis of the accepted modification instruction; and
a procedure for storing the modified privacy policy in the policy storage device in the policy registration procedure and for recording the identification information on the privacy policy in the policy management table in the policy management procedure.

27. The computer program according to claim 26 for causing the computer to further perform a procedure for automatically using the modified privacy policy as the privacy policy of another personal information acquisition device, storing the privacy policy, which is modified as the privacy policy of another personal information acquisition device, in the policy storage device in the policy registration procedure, and for recording the identification information on the privacy policy in the policy management table in the policy management procedure.

28. The computer program according to claim 27 for causing the computer to further perform:
a specification acceptance procedure for accepting a specification of the personal information acquisition device, for which the modified privacy policy is automatically used, from the user; and
a procedure for automatically using the modified privacy policy, as the privacy policy for the specified personal information acquisition device, according to the specification, which is accepted in the specification acceptance procedure, in the policy registration procedure.

29. The computer program according to one of claims 24 to 28 for causing the computer, which further includes a policy temporary storage device that temporarily stores a privacy policy not approved by the user, to perform:
a policy temporary registration procedure for temporarily storing the privacy policy created in the policy creation procedure, as the unapproved privacy policy, in the policy temporary storage device and recording the identification information on the privacy policy in the policy management table in the policy management procedure;
an instruction acceptance procedure for presenting the unapproved privacy policy, which is temporarily registered in the policy temporary storage device, to the user, confirming with the user whether to approve the use of the privacy policy, and accepting the instruction from the user;
a procedure for storing the unapproved privacy policy as an approved privacy policy in the policy storage device, when the user approves the unapproved privacy policy temporarily registered in the policy temporary storage device in the policy registration procedure; and
a procedure for recording the identification information on the privacy policy in the policy management table in the policy management procedure.

30. The computer program according to claim 29, wherein:
the identification information, which is recorded and managed in the policy management table for each personal information acquisition device and for each user in the policy management procedure, includes information that identifies whether the privacy policy is stored in the policy storage device or the policy temporary storage device; and
the computer causes the computer to perform a procedure for determining that the corresponding privacy policy is stored in the policy temporary storage device on the basis of the identification information retrieved by the search, presenting the unapproved privacy policy temporarily registered in the policy temporary storage device to the user, confirming with the user whether to approve the use of the privacy policy, and accepting the instruction from the user in the instruction acceptance procedure.

31. The computer program according to claim 30 for causing the computer to further perform:
a policy modification procedure for accepting an instruction for modifying the privacy policy disapproved by the user in the instruction accepted in the instruction acceptance procedure from the user and modifying the privacy policy on the basis of the accepted modification instruction; and
a procedure for temporarily storing the modified privacy policy in the policy temporary storage device and recording the identification information on the privacy policy in the policy management table in the policy temporary registration procedure.

32. The computer program according to claim 31 for causing the computer to further perform:
a specification acceptance procedure for accepting a specification of the personal information acquisition device, for which the use of the modified and temporarily-registered privacy policy is approved, from the user; and
a procedure for storing the modified and temporarily-registered privacy policy in the policy storage device as the approved privacy policy for the personal information acquisition device, for which the use of the privacy policy is approved, on the basis of the specification of the user and recording the identification information on the privacy policy in the policy management table in the policy registration procedure.

33. The computer program according to one of claims 24 to 32 for causing the computer to further perform:
a request acceptance procedure for accepting a request for user's personal information from the personal information acquisition device and causing a search for the identification information on a privacy policy corresponding to the personal information acquisition device and the user;
an acquisition procedure for acquiring the privacy policy from the policy storage device on the basis of the identification information on the privacy policy retrieved by the search;
a determination procedure for determining whether it is possible to comply with the request according to the acquired privacy policy; and
a providing procedure for providing the requesting personal information acquisition device with the personal information, which is acquired from the personal information storage device that stores personal information, if it is determined that it is possible to comply with the request.

34. The computer program according to one of claims 24 to 33 for causing the computer to further perform:
a requesting procedure for requesting user's personal information from another personal information providing apparatus; and
a receiving procedure for receiving the user's personal information from another personal information providing apparatus.
